(19) Europäisches Patentamt
European Patent Office
Office européen des brevets

(11) **EP 3 839 597 A1**

(12) **EUROPEAN PATENT APPLICATION**

(43) Date of publication:
**23.06.2021  Bulletin 2021/25**

(51) Int Cl.:
**G02B 21/32** *(2006.01)*

(21) Application number: **19315169.3**

(22) Date of filing: **19.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicants:
• **University of Leeds**
**Leeds, Yorkshire LS2 9JT (GB)**
• **Centre National de la Recherche Scientifique**
**75016 Paris (FR)**

(72) Inventors:
• **DEBARREÉ, Delphine**
**75016 Paris (FR)**
• **RICHTER, Ralf Peter**
**Leeds**
**LS2 9JT**
**Yorkshire (GB)**
• **FROST, Anders Rickard**
**Leeds**
**LS2 9JT**
**Yorkshire (GB)**

(74) Representative: **Appleyard Lees IP LLP**
**15 Clare Road**
**Halifax HX1 2HY (GB)**

(54) **A SURFACE FORCE APPARATUS AND A METHOD OF USING IT**

(57)    A surface force apparatus (SFA) comprises a first pressing member (2) presenting a convex first bearing surface having a radius of curvature, and a second pressing member (3) presenting a second bearing surface. At least one of the first and second bearing surfaces comprises an external surface configured to receive thereupon a film of material for immersion in a bulk solvent fluid thereby to be solvated by molecules from the bulk solvent fluid. A manipulator is configured to move at least one of the first and second pressing members to cause the first and second bearing surfaces to bear against each other with a substantially constant and static urging force. Consequently, parts of a said film occupy a gap thereby formed between the first and second bearing surfaces which expels bulk solvent fluid. The ratio ($F/R$) of the magnitude ($F$) of the urging force and the radius of curvature ($R$) of the first bearing surface is in the range 0.3 N/m to 100.0 N/m.

Figure 4A

EP 3 839 597 A1

## Description

### FIELD

The invention relates to a surface force apparatus, and methods for the use thereof.

### BACKGROUND

Solvated polymer coatings have been investigated for a large number of applications, including biomaterials, biosensors, nanomedicine, anti-fouling and anti-microbial coatings, purification and separation membranes, food processing and paints. For these applications, the dynamic properties of the polymers and/or substances (e.g. molecules, macromolecular complexes or nanoparticles) within the film are of great importance.

Methods based on optical microscopy, such as fluorescence recovery after photo-bleaching (FRAP) and fluorescence correlation spectroscopy (FCS), are well-established and popular to study diffusion processes. These techniques, however, fail for thin films that dynamically exchange solutes with the bulk solution: because the dimensions of the volume probed (> 200 nm in $xy$, and > 500 nm in $z$, for diffraction-limited confocal optics) exceed the film thickness (10s to 100s of nanometres). Diffusion scenarios including:

(i) diffusion within the film,

(ii) diffusion in the adjacent bulk liquid, and

(iii) exchange between the film and the bulk liquid,

all contribute to the optical signal.

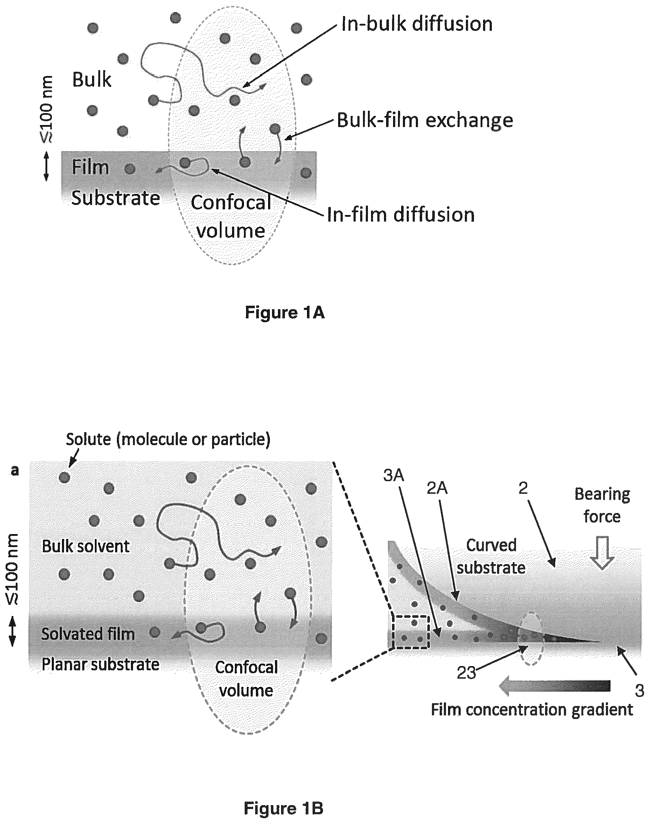

These processes are schematically illustrated in Figure 1A. Molecules (represented as dots in Fig.1A) diffuse in bulk liquid and in the film with rates $D_{bulk}$ and $D_{film}$, respectively. The objective is to quantify $D_{film}$. Because the probe molecules continuously move between the two phases, and the polymer film thickness is below (or close to) the optical resolution limit, it is challenging to separate in-film diffusion (with $D_{film}$) from exchange with the bulk liquid and in-bulk diffusion $D_{bulk}$. Consequently, it remains a challenge to quantify the diffusion of substances within solvated polymer coatings.

The invention aims to address this.

### SUMMARY

A novel methodology and apparatus are provided by the invention, for providing a controlled gap between two separate surfaces that are brought to bear against each other using forces controlled to provide a measurable gap geometry (e.g. radial gap profile) which can contain a sample film of interest and which expels bulk solvent fluid. The invention is applicable to microscopy in general and to confocal microscopy in particular (but not limited thereto). The invention may be used to enable quantification of the diffusion coefficient of substances (e.g. molecules, macromolecular complexes or nanoparticles) within solvated polymer coatings. In addition, information regarding the partitioning of such substances between a polymer film and the bulk liquid, may be obtained.

According to the invention, a confined volume is formed between two surfaces (e.g. a planar and a spherical glass surface, as schematically illustrated in Fig. 1B) within which a bulk solution is effectively excluded. The volume may be controlled to retain nanometre dimensions, along an optical axis, that are less than or comparable to the thickness of the polymer film yet at the same time the lateral dimensions are micrometric (micron dimensions) and thus large enough to be resolved with conventional microscopy.

By pre-functionalizing either one, or both surfaces (e.g. glass) with a polymer film, a region of film overlap may be formed in the close vicinity to the contact point between the two surfaces, when bringing the surfaces together. This enables the use of, amongst other techniques: reflection interference contrast microscopy (RICM), to probe the gap profile between the surfaces as well as the applied load; and/or fluorescence microscopy, to image the distribution of probe substances around the contact point; and/or fluorescence recovery after photobleaching (FRAP) to probe diffusion of probe substances within the overlapping polymer films. FRAP is just one possible method to probe diffusion. Other applicable common methods are fluorescence correlation spectroscopy (FCS), and single particle tracking (SPT), and these are well known to the skilled person in the art.

Herein, the use of the invention is exemplified using model systems of the nuclear pore permselectivity barrier, an important biological confined polymer matrix which makes the transport of macromolecules between the cell nucleus and the cytoplasm highly selective. This choice of exemplification is for convenience of explanation of an implementation of the invention, allowing a better understanding of the invention. It is to be understood that the application of the invention is not limited to these examples.

In a first aspect, the invention may provide a surface force apparatus (SFA) comprising, a first pressing member presenting a convex first bearing surface having a radius of curvature, and a second pressing member presenting a second bearing surface, wherein at least one of the first and second bearing surfaces comprises an external surface configured to receive thereupon a film of material for immersion in a bulk solvent fluid thereby to be solvated by molecules from the bulk solvent fluid. A manipulator is configured to move at least one of the first and second pressing members to cause the first and second bearing surfaces to bear against each other with a substantially constant and static urging force such that parts of a said film occupy a gap thereby formed between the first and second bearing surfaces which expels bulk solvent fluid. The ratio ($F/R$) of the magnitude ($F$) of the urging force and the radius of curvature ($R$) of the first bearing surface is in the range from about 0.3 N/m to about 100.0 N/m.

In this way, the SFA of the invention may be employed to prepare an interface in which bulk solvent fluid is expelled and which is suitable for applying other measurements e.g. to probe the diffusion of substances within thin, solvated polymer coatings. The invention exploits the confinement with well-defined geometry that forms at the interface between a first surface (e.g. convex, such as spherical or other) and a second surface (e.g. planar, concave, convex; such as spherical or other) in close contact, and may use this confinement to analyse samples confined within the space so formed. For example, diffusion processes within the confined space may be analysed. This may be done without interference of substance exchange with, and substance diffusion in, a bulk solution. With this method, information regarding the partitioning of molecules between the confined material (e.g. polymer) coating and the bulk liquid may also be obtained. The methodology enables an increased fundamental understanding of molecular and particle diffusion processes occurring in nanoscale confined spaces. The method is versatile and can be integrated with conventional optical microscopes, and thus has application to investigating functional material (e.g. polymer) coatings.

By providing a substantially constant and static urging force, the invention permits the confined region to be stable and predictable in position, geometry and form. Stability of position (static force) avoids slippage of one bearing surface relative to another, which would render the urging force non-constant. The slippage may not only change the magnitude of the urging force, but may also change its direction (i.e. non-constant force vector). The slippage may occur relatively quickly, or may occur more slowly and gradually leading to progressive reductions in the accuracy with which the geometry/gap profile of the interface may be measured or calculated. Furthermore, slippage between urging surfaces is likely to damage film samples at the interface. This would have the effect of rendering the geometry of the interface region difficult to predict and therefore render measurements inaccurate.

Consider two curved convex surfaces with radii of curvature $R_1$ and $R_2$, respectively, pressed against each other with a force $F$. According to Derjaguin's approximation, the force can be related to the energy W (per unit area) between two flat co-planar surfaces as:

$$F = 2\pi \left( \frac{R_1 R_2}{R_1 + R_2} \right) W$$

From this equation, one can identify the effective radius:

$$\left( \frac{R_1 R_2}{R_1 + R_2} \right)$$

as a scaling factor. In the limiting case of the second surface being flat ($R_2 \to \infty$), this effective radius is:

$$\frac{R_1 R_2}{R_1 + R_2} \to R_1$$

In the special case of both surfaces having the same radius ($R_1 = R_2$), the effective radius is:

$$\frac{R_1 R_2}{R_1 + R_2} = \frac{R_1}{2}$$

Hence, the scaling factor varies between $\frac{1}{2}R_1$ and $R_1$ for any curvature of $R_2$ as long as $R_1 < R_2$. Thus, the quantity $F/R$ (with $R$ being the radius of curvature of the first bearing surface) is a suitable measure to normalise the force against the curvatures over the full range of possible curvatures. Preferably, the value of $F/R$ lies between about 0.3 N/m and about 100.0 N/m (inclusive). The lower limit roughly corresponds to what is referred to as a 'soft contact' in the description of an embodiment, below.

It has been found that by constraining the ratio ($F/R$) to be in the range from 0.3 N/m to 100.0 N/m, reliable and accurate measurement of the interface geometry (e.g. radial gap profile) can be achieved, when the force ($F$) is constant and static. More preferably, the ratio ($F/R$) of the magnitude ($F$) of the urging force and the radius of curvature ($R$) of the first bearing surface may be in the range 0.3 N/m to 10.0 N/m.

The manipulator may be controllable to control the urging force applied by it to at least one of the first pressing member and the second pressing member, therewith to control the dimensions of the gap. The manipulator may be manually controllable to adjust the urging force thereby to control the width of the gap. The manipulator may be controllable to control the magnitude of the urging force to maintain a substantially constant value, in use. The manipulator may be controllable to control the direction of the urging force to maintain a substantially constant direction (vector), in use. Desirably, the manipulator is configured to control the direction of the urging force so as to be substantially constant relative to the bearing surface to which it is applied. Most preferably, the manipulator is configured to direct the urging force to be substantially perpendicular relative to a tangent of the bearing surfaces at the contact point thereon at which it is applied. This has the benefit of avoiding locally parallel (i.e. surface parallel) components of the urging force at the contact point, which would otherwise tend to urge the bearing surfaces to slip relative to each other at the point of contact.

The second bearing surface may be substantially planar, or the second bearing surface may be convex, or the second bearing surface may be concave with a radius of curvature that has a magnitude exceeding the magnitude of the radius of curvature of the first bearing surface. For example, one of the first and second bearing surfaces may be substantially spherically convexly curved (e.g. a hemispherical surface). The other of the first and second bearing surfaces may be substantially planar. Preferably, the manipulator is configured such that the urging force is applied in a direction passing though the centre of curvature of one or both of the first and second bearing surfaces. This provides a stable configuration less prone to slippage when subject to the urging force.

The second bearing surface may be non-planar and the magnitude of the radius of curvature of second bearing surface may exceed the magnitude of the radius of curvature of the first bearing surface. For example, one of the first and second bearing surfaces may be substantially spherically convexly curved (e.g. a hemispherical surface). The other of the first and second bearing surfaces may be substantially spherically concavely curved (e.g. a hemispherical recess/cup surface).

Desirably, the radius of curvature of first bearing surface is not less than 1 μm and not greater than 1 cm. For example, the radius of curvature of first bearing surface may be not less than 50 μm and not greater than 5 mm, such as between 0.5 mm and 4 mm. For example, if the second bearing surface is non-planar, the radius of curvature of second bearing surface may be not less than 1 μm and not greater than 3cm (or not greater than1 cm), or may be not less than 50 μm and not greater than 5 mm, such as between 0.5 mm and 4 mm.

The first pressing member may be an elongated rod terminating at a rod end at which the first bearing surface is presented. The elongated rod may be fixed or held, by the manipulator, at a position along its elongated length which is spaced from the rod end by a free length (L) in the range: about 0.1cm < $L$ < about 5.0 cm.

Preferably, the rod is configured such that the buckling instability of the rod is low in respect of the ratio ($F/R$) of applied urging force ($F$) and radius of curvature ($R$) of the rod end. That is to say, preferably the longitudinal force ($F_{long}$) required to cause the elongated rod to buckle, when applied to the rod in a direction along its elongated length, when divided by the value of the radius of curvature ($R$) of the rod end, exceeds $F_{long}/R$ = about 100 N/m. This constraint assists in providing a substantially static and constant urging force when applied via the elongated rod, because the elongated rod is configured not to buckle in response to the urging force and thereby not to change the magnitude or the direction of the urging force when applied. Consider a uniform glass rod of cylindrical rod radius $R$, rod free length $L$ and formed from a material of Young's modulus $E$ with one end fixed and the other a free hemispherical end. The longitudinal force $F_{buckle}$ required for such a rod to buckle is:

$$F_{buckle} = \frac{\pi^3}{2}\frac{ER^4}{L^2}$$

For a cylindrical rod with a hemispherical rod end, such as this, the radius of curvature of the rod end is the same as the cylindrical rod radius of the rod itself. For example, consider a particular example of a glass rod: we have $R$ = 3 mm, $L$ = 2 cm and $E$ = 64 GPa. This is applicable to the invention, and gives $F_{buckle}/R$ = about $7 \times 10^7$ N/m. This

exceeds the maximal urging force in the invention ($F/R$ = about 100 N/m) by more than five orders of magnitude. If the length and elasticity of this rod were kept constant, then the radius of the rod may be reduced below 34 $\mu$m before buckling is possible within the range of urging forces applicable by the SFA of the invention. Alternatively, the free length ($L$) of the elongated rod may be reduced to increase the required buckling force if the radius of the rod is very small (e.g. 34 $\mu$m), thereby to avoid buckling. The radius of the elongated rod may be in the range 10 $\mu$m to 5 mm.

The elongated rod may be a glass rod. Each bearing surface (e.g. the surface of the rod end, providing a bearing surface, and the surface it bears against) may have a surface finish (roughness) not exceeding about 1.0 nm RMS (root mean square), or preferably not exceeding about 0.5 nm RMS. Surface roughness may be measured according to the ISO 4287:1997 standard. These high-quality surfaces provide a smoothness which assists in controlling the geometry of the gap formed between the bearing surfaces, in use, and in allowing the applied bearing force to be generally perpendicular to the smooth local surface tangent at the contact point between bearing surfaces when the bearing force is applied, in use. Established manufacturing tolerances for surface finishes by polishing, range from about 5 nm RMS for typical quality, and about 2 nm RMS for precision quality, and about < 0.5 nm RMS for high quality. The latter value is the range applicable to embodiments of the invention described below, for the glass rods used (e.g. 0.36 nm RMS). Thus, desirable surface finishes roughness values can be obtained with established polishing methods.

The manipulator may be configured to translate the first pressing member transversely towards or away from the second pressing member to cause or cease the first bearing surface to bear against the second bearing surface. The manipulator may comprise a resiliently deformable lever arm part attached thereto, to which one of the first and second pressing member is attached. The resiliently deformable lever arm part may be non-rotatingly attached to the manipulator which may be (e.g. fixed to a translation stage) arranged to linearly translate the lever arm. The manipulator may be configured to urge the lever arm part in a direction (e.g. by linear translation) which is transverse to the lever arm and which is towards the second pressing member, thereby to cause the first bearing surface to bear against the second bearing surface. The manipulator may be controllable to adjust the direct separation, in a direction corresponding to the direction of the urging force, between the lever arm part and the second bearing surface (i.e. relative to the contact point at which the bearing force is to be applied). The reaction force transmitted from the second bearing surface to the lever arm part, via the first pressing member, may cause a resilient flexure of the lever arm part. The manipulator may control the size of the bearing force applied via the lever arm part by adjusting the flexure of the lever arm part, according to adjustments to the direct separation made, in turn, by controllably translating the lever arm part. The magnitude of the urging force, for a given direct separation, will be determined according to the spring constant of the lever arm part. The value of the ratio ($k/R$) of the spring constant ($k$) of the lever arm part and the radius of curvature ($R$) of the first bearing surface, may be in the range from about 0.3 x $10^6$ N/m$^2$ to about 100.0 x $10^6$ N/m$^2$.

Commercially available micromanipulators can achieve a resolution of movement (e.g. for controlling the direct separation) of a few 10s of nm, and manual translation stages readily reach below 1 $\mu$m. With a resolution of movement of 1 $\mu$m, and a spring constant in the range from about 0.3 x $10^6$ N/m$^2$ to about 100.0 x $10^6$ N/m$^2$, forces between about 0.3 N/m and about 100.0 N/m can readily be attained.

The manipulator may comprise a fulcrum, or pivot mechanism, to which a lever arm part is pivotingly mounted and one of the first pressing member and the second pressing member may be attached to the lever arm to apply a torque to the fulcrum. For example, a pressing member may be mounted to the lever arm at a location thereupon which is spaced from the pivot mechanism such that weight of the pressing member applies a turning force (torque) to the lever arm to urge it to pivot about the pivot mechanism. The manipulator may be operable to move the position of the fulcrum in a direction transversely towards or away from the other of the first pressing member and the second pressing member to adjust said torque (e.g. the component of the weight of the pressing member (gravity) acting in a direction perpendicular to the lever arm). This may control the angle at which the one of the first pressing member and the second pressing member applies said substantially constant and static urging force to the other of the first and the second pressing member. Accordingly, the direction (vector) of the urging force may be adjusted. Most preferably, the direction of the urging force may be selected so as to be substantially perpendicular to the local tangent at the contact point between the first and second bearing surfaces, when applied there.

The manipulator may include a lever arm support part which is spaced from the pivot mechanism, and which is adapted to support the lever arm part in a quiescent state when no bearing force is applied between the first bearing surface and the second bearing surface. The support part may be configured to support the lever arm part at a location therealong which is between the pivot mechanism and the pressing member attached to the lever arm part. The lever arm support part may be arranged to support the lever arm part in a quiescent state whereby the lever arm part is substantially horizontal, in use. The lever arm part is preferably configured to freely separate from the lever arm support part to cease support of the lever arm when the first bearing surface and second bearing surface bear against each other. Accordingly, the reactive force supplied by the bearing force is permitted to counteract/support the weight of the pressing member and lever arm part at the interface between the bearing surfaces. The lever arm part may be freely separable from the lever arm support part by a rotating motion of the lever support arm part by a rotational motion of the latter relative to the former, or vice versa. For example, the lever arm support part may be rotatingly coupled to the manipulator and configured to controllably rotate whilst supporting the weight of the lever arm part which passively/freely pivots in sympathy about the pivot mechanism, in its quiescent state, whilst the lever arm support part rotates in this way. If the controlled rotation of the lever arm support part is such as to bring the first and second bearing surfaces to urge against each other, then once the urging force is created a continues rotation of the lever arm support part causes it to freely separate from the lever arm part. This mechanism and method allows gravity to provide the necessary/desired urging force via a passive rotation of the lever arm about the pivot mechanism, without applied rotational forces being used to rotate the lever arm part. Applied rotational forces may accidentally add undesirably to the urging force in an uncontrolled way, rendering it more difficult to maintain in a static and constant urging force. The reverse direction of rotation may subsequently bring the lever arm support part back into contact (support) with the lever arm part to separate the first and second bearing surfaces in a controlled way.

The manipulator may comprise a counter-torque part arranged to apply to the fulcrum an adjustable counter-torque. For example, the lever arm part may comprise the counter-torque part. The lever arm part may comprise a balance mechanism comprising a first lever arm part to which one of the first and second pressing members is attached, and a second lever arm part to which a counter-weight is coupled. The first and second lever arm parts may be mutually rotatingly coupled to the pivot mechanism to form a balance mechanism. The position along the second lever arm part at which the counter-weight is coupled to the second lever arm part, may be adjustable to adjust the value of the counter-torque. In this way, by using gravity and the adjustable position of the counter-weight, one may adjust the net torque applied to the lever arm and, therefore, the value of the urging force applied by the pressing member attached to it. The manipulator may comprise a counter-torque part arranged to apply a magnetic force or an electrical force, respectively, to the lever arm part. For example, the counter-torque part may include a first magnetic (or electrical) force unit coupled to the lever arm part to which one of the first and second pressing member is also coupled, and a second magnetic (or electrical) force unit attached to the manipulator (and not coupled to the lever arm part) and arranged to apply to the first magnetic (or electrical) force unit a magnetic (or electrical) force directed to generate the counter-torque. If the lever arm part comprises a balance mechanism, including a first and second lever arm parts mutually rotatingly coupled to the pivot mechanism to form a balance mechanism, then pressing member may be coupled to the first lever arm part and the first magnetic (or electrical) force unit may be coupled to the second lever arm part. Alternatively, when if the lever arm part does not define a balance mechanism, then both the pressing member and the first magnetic (or electrical) force unit may be coupled the lever arm part at the same side of pivot assembly. The magnitude of the magnetic (or electrical) force may be adjustable to adjust the value of the counter-torque. In this way, the position of the counter-weight may be adjusted to adjust the net torque applied to the lever arm and, therefore, the value of the urging force applied by the pressing member attached to it.

The manipulator may be configured to translate the first pressing member laterally across the second bearing surface to select a location thereupon to cause the first bearing surface to bear against the second bearing surface.

The manipulator may comprise a motorised micromanipulator. One suitable example, among many, is the 'PatchStar' micromanipulator available from Scientifica Limited (a UK company with an address at Kingfisher Court, Brambleside, Bellbrook Industrial Estate, Uckfield, East Sussex, TN22 1QQ, United Kingdom). The manipulator may be mounted next to a microscope on an optical bench, such as is illustrated in an embodiment of the invention, below. Other manipulators and arrangements are possible, as discussed below. Miniaturised manipulators (also known as '3-axis translation stages') may be used. These may be fitted on a microscope stage, as desired. Examples are readily commercially available, e.g. from Thorlabs, Inc. (a US company with an address at 56 Sparta Avenue, Newton, New Jersey 07860, United States of America).

The surface force apparatus may include a probe light source configured to illuminate the gap with probe light to generate a visible optical interference pattern created by the probe light at the gap. The manipulator may be controllable to control the urging force applied thereby to at least one of the first pressing member and the second pressing member, therewith to control the dimensions of the gap by adjusting the interference pattern.

The surface force apparatus may comprise a photodetector (e.g. camera) configured to detect the optical interference pattern created by the probe light at the gap. The surface force apparatus may be arranged to output image data of the optical interference pattern generated by the photodetector (e.g. camera) for use by a user in forming an image on an image display apparatus.

The surface force apparatus may be arranged to analyse image data of the optical interference pattern generated by the photodetector (e.g. camera), and therewith to calculate and apply an adjustment to the urging force according to that pattern.

The surface force apparatus may be arranged to transmit the probe light to the gap through one of the first and second pressing members, and to transmit light of the generated optical interference pattern through one of the first and second pressing members for detection.

In a second aspect, the invention provides a reflection interference contact microscope (RICM) comprising the surface force apparatus described above.

In a third aspect, the invention provides an optical (e.g. confocal) microscope comprising the surface force apparatus described above.

In a fourth aspect, the invention provides a method for controlling a solvated film of material comprising, providing a surface force apparatus (SFA) comprising a first pressing member presenting a convex first bearing surface having a radius of curvature, and a second pressing member presenting a second bearing surface. The method includes forming a film of material upon an external surface of at least one of the first and second bearing surfaces, and immersing said film(s) in a bulk solvent fluid thereby to solvate the film(s) with molecules from the bulk solvent fluid. The method includes moving at least one of the first and second pressing members to cause the first and second bearing surfaces to bear against each other with a substantially constant and static urging force such that parts of a said film occupy a gap thereby formed between the first and second bearing surfaces which expels bulk solvent fluid. The ratio ($F/R$) of the magnitude ($F$) of the urging force and the radius of curvature ($R$) of the first bearing surface is in the range 0.3 N/m to 100.0 N/m.

The method may include controlling the urging force applied to at least one of the first pressing member and the second pressing member to control the dimensions of the gap.

The method may include illuminating the gap with probe light to generate a visible optical interference pattern created by the probe light at the gap, and controlling the urging force applied to at least one of the first pressing member and the second pressing member, therewith to control the dimensions of the gap by adjusting the interference pattern.

The method may include detecting the optical interference pattern created by the probe light at the gap, and outputting image data of the optical interference pattern for use by a user in forming an image on an image display apparatus.

The method may include analysing the image data of the optical interference pattern and applying an adjustment to the urging force calculated according to that pattern.

The method may include transmitting the probe light to the gap through one of the first and second pressing members and transmitting light of the generated optical interference pattern through one of the first and second pressing members for detection.

The method may include translating the first pressing member laterally across the second bearing surface and selecting a location thereupon to cause the first bearing surface to bear against the second bearing surface.

Preferably, the method may include translating the first pressing member transversely towards or away from the second pressing member to cause or cease the first bearing surface to bear against the second bearing surface.

In the method, the manipulator may comprise a fulcrum or pivot mechanism to which a lever arm is pivotingly mounted and one of the first pressing member and the second pressing member is attached to the lever arm to apply a torque to the fulcrum. The method may include moving the position of the fulcrum transversely towards or away from the other of the first pressing member and the second pressing member to adjust said torque thereby to control the angle at which the one of the first pressing member and the second pressing member applies said substantially constant and static urging force to the other of the first and the second pressing member.

Desirably, the method may include applying to the fulcrum a counter-torque which is counter to said torque.

The method may include determining the dimensions of the gap by the steps of, from the interference pattern, determining a depth of penetration of one of the first bearing member and the second bearing member into the bearing surface of the other of the first bearing member and the second bearing member. The method may include the steps of determining an optical thickness of said film compressed between the first bearing surface and the second bearing surface, and calculating a value of the urging force according to the determined a depth of penetration and the determined optical thickness. The method may include the steps of calculating the aforesaid dimensions of the gap according to the calculated value of the urging force and the determined optical thickness of the film compressed between the first bearing surface and the second bearing surface.

The method may include determining the dimensions of the gap by the steps of, from said interference pattern, determining a depth of penetration of one of the first bearing member and the second bearing member into the bearing surface of the other of the first bearing member and the second bearing member. The method may include the steps of determining a value of the urging force, and calculating an optical thickness of the film compressed between the first bearing surface and the second bearing surface according to the determined a depth of penetration and the determining urging force. The method may include the steps of calculating said dimensions of the gap according to the determined value of the urging force and the calculated optical thickness of said film compressed between the first bearing surface and the second bearing surface.

The surface force apparatus (SFA) may comprise a computer (e.g. a processor) arranged to control the SFA to implement a method described above. The computer may be programmed with a computer program code configured to control the computer, when executed, to implement a method described above. In one of its aspects, the method is a computer-implemented method. In another of its aspects, the invention provides a computer program product comprising a computer program code configured to be executable on an SFA as described above, so as to implement a method described above. The computer program product may be stored in a computer-readable storage/memory product (e.g. an optical storage disk, or a solid-state storage device) for sale to users of an SFA apparatus such as described above, or may be stored in a computer storage/memory (e.g. on a server apparatus accessible by a computer network, such as the Internet) for sale and transmission (e.g. via the Internet) to users of an SFA apparatus such as described above.

In a fifth aspect, the invention may provide a method for determining a partition coefficient of molecules as between a bulk solution and a solvated film of material, including controlling the solvated film of material as described above, and determining a partition coefficient in respect of a solvated film within the aforesaid gap. The computer program product described above may be configured to determine a partition coefficient as described above, or herein.

The invention may provide a microscope comprising, a receptacle for receiving a solvent fluid, and a first pressing member disposed within the receptacle and having a convex first bearing surface configured to receive thereupon a first film of material to be solvated by molecules in the solvent fluid. A second pressing member has a second bearing surface. It is sufficient that only one of the two surfaces bears a film of material, however, the second surface may also be configured to receive thereupon a second film of material to be solvated by molecules in the solvent fluid. The second bearing surface is disposed within the receptacle to oppose the first bearing surface. A manipulator is coupled to the first pressing member and configured to apply an urging force to the first pressing member to cause the first bearing surface to bear against the second bearing surface such that the first film and the second film are brought into contact to form an interface which occupies a gap formed between the first and second bearing surfaces and which expels solvent fluid. An objective lens is arranged for use in forming an image of the interface. Preferably, the microscope comprises the surface force apparatus (SFA) described above, and the first and second bearing surface of the microscope may be the first and second bearing surfaces, respectively, of the SFA.

The microscope may include a probe light source configured to illuminate the interface with probe light to generate a visible optical interference pattern created by the probe light at the interface. The manipulator may be adjustable (e.g. manually, by a user; or automatically) to adjust the urging force to control the width of the gap thereby to adjust the interference pattern.

The microscope may include a photodetector (e.g. camera) configured to detect the optical interference pattern created by the probe light at the interface. The microscope may be arranged to output image data of the optical interference pattern generated by the photodetector (e.g. camera) for use by a user in forming an image on an image display apparatus. In this way, the user may view the image of the optical interference pattern and inspect it to determine changes therein responsive to changes in the urging force controlled by the user.

The manipulator may be configured for adjusting (e.g. automatically, or manually by a user) the urging force according to the interference pattern thereby to control the width of the gap. The microscope may be arranged to analyse image data of the optical interference pattern generated by the photodetector (e.g. camera), and therewith to calculate and apply an adjustment to the urging force according to that pattern. In this way, an automatic adjustment may be implemented.

The microscope may be arranged to transmit the probe light to the interface through one of the first and second pressing members. The probe light may be directed through the second pressing member, for example. The probe light may be directed through the objective lens towards the interface. The interference pattern (light from it) may be directed/collected via the objective lens.

The second bearing surface may be substantially planar. Alternatively, the second bearing surface may be convex.

The first pressing member may comprise an elongated rod terminating at a rod end defining said first bearing surface.

The second pressing member may present to the first pressing member an external surface area for use as the second bearing surface. The manipulator may be configured to translate the first pressing member laterally across the external surface area to select a location thereupon to cause the first bearing surface to bear against the second bearing surface. Alternatively, or additionally, the manipulator may be configured to translate the first pressing member transversely towards or away from the external surface area to cause or cease the first bearing surface to bear against the second bearing surface.

In another aspect, the invention may provide a reflection interference contact microscope comprising the microscope described above.

In yet another aspect, the invention may provide an optical (e.g. confocal) microscope comprising the microscope described above.

In a yet further aspect, the invention may provide a method of microscopy comprising, providing a receptacle containing a solvent fluid. Disposing within the receptacle a first pressing member having a convex first bearing surface having thereupon a first film of material to be solvated by molecules in the solvent fluid. Disposing within the receptacle a second pressing member having a second bearing surface. Optionally, the second bearing surface may also have thereupon a second film of material to be solvated by molecules in the solvent fluid. The second bearing surface is disposed within the receptacle to oppose the first bearing surface. Applying an urging force to the first pressing member to cause the first bearing surface to bear against the second bearing surface such that the first film and the second film are brought into contact to form an interface which occupies a gap formed between the first and second bearing surfaces and which expels solvent fluid. With an objective lens, forming an image of the interface. Preferably, the method is implemented using the surface force apparatus (SFA) described above, and the first and second bearing surface of the method may be the first and second bearing surfaces, respectively, of the SFA.

The method may include manually adjusting the urging force thereby to control the width of the gap.

The method may include illuminating the interface with probe light to generate a visible optical interference pattern created by the probe light at the interface, and adjusting the urging force to control the width of the gap thereby to adjust the interference pattern.

The method may include, using a photodetector (e.g. camera), detecting the optical interference pattern created by the probe light at the interface, and, from the photodetector (e.g. camera), obtaining image data of the optical interference pattern generated by the photodetector (e.g. camera), and therewith forming an image of the optical interference pattern on an image display apparatus.

The method may include adjusting the urging force according to the interference pattern thereby to control the width of the gap.

The method may include analysing image data of the optical interference pattern generated by the photodetector (e.g. camera), and therewith calculating and applying an adjustment to the urging force according to that pattern.

The method may include transmitting the probe light to the interface through one of the first and second pressing members.

In the method, preferably, the second pressing member presents to the first pressing member an external surface area defining said first bearing surface, and the method may include translating the first pressing member laterally across the external surface area to select a location thereupon to cause the first bearing surface to bear against the second bearing surface. Alternatively, or additionally, the method may include translating the first pressing member transversely towards or away from the external surface area to cause or cease the first bearing surface to bear against the second bearing surface.

## BRIEF DESCRIPTION OF DRAWINGS

Figure 1A schematic represents probe molecules (dots) partitioned between a bulk solution and a thin polymer coating/film of typically 10s to 100s of nanometres in thickness, coating a support substrate.

Figure 1B schematic represents the confining of polymer coatings between a planar and a curved surface.

Figure 2A schematically represents an SFA in combination with a microscope (not to scale) according to an embodiment of the invention.

Figure 2B schematically represents a microscope (not to scale) according to an embodiment of the invention.

Figure 3A schematically represents an SFA in combination with a microscope (not to scale) according to an embodiment of the invention.

Figure 3B schematically represents a sequence of steps in an example of the use of the SFA of the embodiment of the invention illustrated in Figure 3A, using the microscope.

Figure 4A schematically represents an SFA in combination with a microscope (not to scale) according to an embodiment of the invention.

Figure 4B schematically represents a sequence of steps in an example of the use of the SFA of the embodiment of the invention using a microscope.

Figure 5A schematically represents an SFA in combination with a microscope (not to scale) according to an embodiment of the invention.

Figure 5B schematically represents a sequence of steps in an example of the use of the SFA of the embodiment of the invention illustrated in Figure 5A, using the microscope.

Figure 6A schematically represents an SFA in combination with a microscope (not to scale) according to an embodiment of the invention.

Figure 6B schematically represents a sequence of steps in an example of the use of the SFA of the embodiment of the invention illustrated in Figure 6A, using the microscope.

Figure 7A schematically represents an SFA in combination with a microscope (not to scale) according to an embodiment of the invention.

Figure 7B schematically represents a sequence of steps in an example of the use of the SFA of the embodiment of the invention illustrated in Figure 7A, using the microscope.

Figure 8A schematically represents a sequence of steps in an example of a method of analysis of an optical pattern obtained using the SFA of an embodiment of the invention, in order to calculate dimensions of a gap formed by the SFA within which a film of material is confined for study.

Figure 8B schematically represents a sequence of steps in an example of a method of analysis of an optical pattern obtained using the SFA of an embodiment of the invention, in order to calculate dimensions of a gap formed by the SFA within which a film of material is confined for study.

Figure 9A schematically represents an example of a manipulator of an SFA according to an embodiment of the invention, comprising a lever arm supported in a quiescent state by a lever arm support prior to application of an urging force by the SFA, e.g. quiescent with a small gap between the two apposed surfaces.

Figure 9B schematically represents the example of a manipulator of the SFA according to Figure 9A, in which the lever arm is not supported in a quiescent state by the lever arm support, and the SFA is in a state of applying an urging force.

Figures 10A, 10B and 10C show an analysis of a spherical surface pressing on a planar surface.

Figure 10D schematically shows, in cross section, the geometry of an interface formed between a hemispherical first bearing surface when urged against a planar second bearing surface by a substantially static and constant urging force (e.g. 'hard contact'), according to an embodiment of the invention.

Figure 11 shows a deflection vs load curve of a rod holder of the manipulator of an embodiment of the invention, from which the spring constant of the rod holder is determined.

Figure 12A shows a representative optical interference pattern in the form of a RIC micrograph of a spherically-curved surface (glass rod tip) pressing on a planar surface (a glass cover slip), such as is schematically shown in Figure 10D.

Figure 12B shows a radial intensity profile extracted from the RIC micrograph of Figure 12A (data 'dots'), together with an azimuthally averaged data (solid line #1) and a fitted line calculated according to an optical model assuming a perfect plane-sphere interface geometry (solid line #2).

Figure 12C graphically illustrates an effective RICM height (see Figure 10D, $h_{off}$) at the centre of the spherically-curved surface (glass rod tip) relative to the planar surface (a glass cover slip) schematically illustrated in Figure 12D, as a function of the quality of the contact, here operationally defined as 'soft', 'medium' and 'hard'.

Figure 12D schematic represents the contact geometry corresponding to an ideal plane-sphere interface (ideal contact; 'spherical cap') and a harder contact (hard contact; transparent 'spherical cap') between the spherically-curved surface (glass rod tip) pressing on a planar surface (a glass cover slip).

Figure 12E graphically illustrates an effective RICM height (see Figure 10D, $h_{off}$) versus compressive force predicted from a Hertz contact model considering the geometries and mechanical properties of the spherically-curved surface (glass rod tip) pressing on a planar surface (a glass cover slip).

Figure 12F graphically illustrates a gap distance versus the distance from the centre of contact (radius) predicted from a Hertz contact model considering the geometries and mechanical properties of the spherically-curved surface (glass rod tip) pressing on a planar surface (a glass cover slip). The inset shows the difference in gap distance between the soft and hard contacts compared to the ideal contact.

Figure 13A schematically represents a microscope (not to scale) according to Figure 2A or Figure 2B.

Figure 13B illustrates a fluorescence micrograph of the plane-sphere interface with both surfaces functionalized. The area of contact is visible as a zone of reduced fluorescence.

Figure 13C illustrates a fluorescence micrograph of the plane-sphere interface as in Figure 13B after photo-bleaching of a circular region. A fluorescence intensity profile (inset), is shown corresponding to the profile taken along the white dashed line indicated in the figure.

Figure 13D shows the interface shown in Figure 13C after retracting the spherical surface and making a new contact on the planar surface approximately 50 $\mu$m to the right. Two fluorescence intensity profiles (inset), are shown corresponding to the profile taken along the two white dashed lines indicated in the figure.

Figures 14A to 14G show an analysis of the distribution of three model substances (GFP$^{Std}$, GF$^{Inert}$, GFP$^{NTR}$) inside the gap region with fluorescence microscopy. Surfaces were coated with a model polymer film (Nsp1) where indicated.

Figures 15A and 15B show an analysis of GFP distribution (partitioning) inside the polymer film with fluorescence microscopy.

Figures 16A to 16E show an analysis of macromolecular diffusion along confined polymer films by line FRAP.

Figures 17A and 17B show atomic force micrographs (0.5 x 0.5 $\mu$m$^2$) of the surface of (Fig.17A) a glass rod following the polishing procedure used to prepare spherical caps, and (Fig.17B) a glass cover slip. The glass surfaces are smooth on the nm scale.

Figures 18A, 18B and 18C show a determination of the imaging resolution $r_{0c}$ and the width of the bleached line $r_{0e}$.

Figures 19A and 19B show a one-end grafting of Nsp1 FG domain polymers characterized by quartz crystal microbalance (QCM-D).

Figures 20A to 20E show interactions of GFP probe molecules with bare and Nsp1 functionalized surfaces.

Figure 21 schematically illustrates an example of solute diffusion and partition coefficient measurements made according the invention.

## DESCRIPTION OF EMBODIMENTS

The invention is exemplified in the following embodiments in terms of a plane surface and a spherical surface, merely to provide a simple example to better understand the invention. When referring to these illustrative examples, the term 'plane-sphere confinement microscopy' (PSCM) shall be used for brevity. However, it must be understood that the invention is not limited to the use of a plane surface and a spherical surface. For example two convex surfaces may be used, or a plane surface and a non-spherical convex surface may be used.

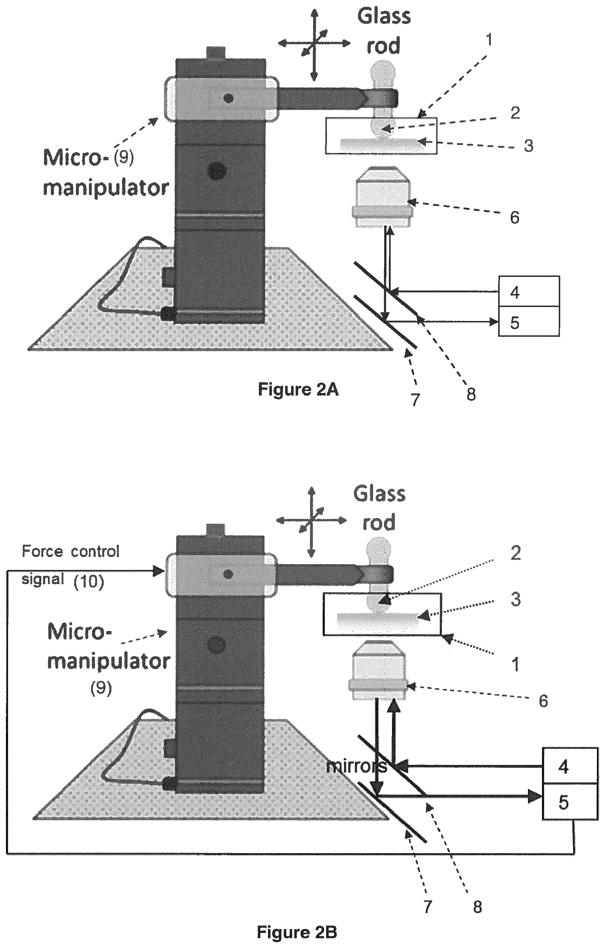

Figures 2A and 2B schematically illustrate a microscope according to two embodiments of the invention, each arranged for controllably forming an interface of the form shown schematically in Figure 1B (right-hand image). Figure 1B illustrates the confining of polymer film coatings between a planar and a curved surface (right-hand image). A bulk solution is excluded in the region surrounding the contact between the two film coatings. This enables optical (e.g. confocal) microscopy to probe diffusion within the polymer film coatings without interference from substance exchange with, and diffusion in, the bulk solution, and also to quantify the partitioning of probe molecules between the bulk and polymer phases.

Figures 2A and 2B each show a microscope according to a respective embodiment of the invention. A glass rod with a spherical cap is positioned above the objective of an inverted optical (e.g. confocal) microscope and lowered towards a planar surface until contact is reached using a micromanipulator. The microscope comprises a receptacle (1) for receiving a solvent fluid (the 'bulk' fluid of Figure 1B), and a first pressing member (2) disposed within the receptacle and having a spherically convex first bearing surface. The convex first bearing is configured to be coated by a first film of material (2A of Figure 1B) to be solvated by molecules in the solvent fluid. A second pressing member (3) has a second bearing surface which is substantially planar. This second bearing surface is also configured to be coated by a second film of material (the 'Film' 3A of Figure 1B) to be solvated by molecules in the solvent fluid. The second bearing surface is disposed within the receptacle to oppose the first bearing surface.

The manipulator (9) is coupled to the first pressing member and configured to apply an urging force to the first pressing member in the vertical direction to cause the first bearing surface to bear against the second bearing surface such that the first film and the second film are brought into contact to form an interface (23) which occupies a gap formed between the first and second bearing surfaces and which expels bulk solvent fluid. An objective lens (6) is arranged for use in forming an image of the interface. The first pressing member comprises a transparent glass rod terminated at each rod end with a hemispherical surface. The rod may be made of transparent glass. The second bearing surface may be a transparent glass slide, such as a common microscope slide.

The manipulator (9) illustrated in Figure 2A is designed to be manually controllable to adjust the urging force to control the width of the gap. This allows a user to manually control the manipulator to control the force applied by the first urging surface against the second urging surface. It also allows manual control of the position of contact of the first urging surface upon the second urging surface, enabling the user to probe different region of the second surface at will.

The microscope includes a probe light source (4) configured to illuminate the interface with probe light to generate a visible optical interference pattern created by the probe light at the interface. The manipulator may be adjusted (e.g. manually, by a user, in this example) to adjust the urging force to control the width profile of the gap (23). This has the effect of changing the interference pattern formed at the gap and thereby allows the user to determine the gap size by measuring the structure of the interference pattern, as is described in more detail below. By an iterative process, the user may achieve a desired gap size as confirmed by achieving the required associated structure in the interference pattern.

The microscope may include a photodetector (e.g. camera) and data analysis unit (e.g. computer) (5) configured to detect the optical interference pattern created by the probe light at the interface. The manipulator may be arranged to output image data of the optical interference pattern generated by the photodetector for use by a user in forming an image on an image display apparatus (not shown). In this way, the user may view the image of the optical interference pattern and inspect it to determine changes therein responsive to changes in the urging force controlled by the user.

The manipulator may be configured for adjusting (automatically) the urging force according to the interference pattern thereby to control the width of the gap. The data analysis unit (5) may be arranged to analyse image data (10) of the optical interference pattern generated by the photodetector, and therewith to calculate and apply an adjustment to the urging force according to that pattern. In this way, an automatic adjustment may be implemented. This alternative embodiment is illustrated in Figure 2B, whereby the photodetector (e.g. camera) and data analysis unit (5) is connected in communication with the manipulator (9) to transmit force control signals (10) calculated using image data of the interference pattern detected by the data analysis unit (5). From the interference pattern the data analysis unit (5) may be configured to calculate the magnitude of an applied urging force. With knowledge of the calculated urging force, the data analysis unit (5) may be configured to determine an adjustment to the urging force necessary to achieve a desired gap geometry (e.g. gap profile in a radial direction from the interface centre) created when the first surface (2) is urged against the second surface (3). The manipulator unit comprises a processor unit arranged to perform this calculation. In this sense, the image data of the interference pattern may be considered to be a force control signal. In alternative embodiments, the photodetector and data analysis unit (5) may comprise a processor unit arranged to perform this calculation, and to transmit a force control signal to a user rather than to the manipulator (9), such that the user may personally control the manipulator as desired.

The microscope is arranged to transmit the probe light from the light source (4) to the interface through the underside of the second pressing member (3), via the objective lens (6) of the microscope. A first mirror (8) directs the probe light from the light source into the objective lens towards the interface. The returned light from the interference pattern is collected via the objective lens (6) and directed to the photodetector and data analysis unit (5) via a second mirror (7).

In the present examples, the second bearing surface is substantially planar. Alternatively, in other embodiments, the second bearing surface may be convex (e.g. cylindrically or spherically curved, or other convex shape). Preferably, however, the radius of curvature of second bearing surface exceeds the radius of curvature of the first bearing surface, such that the probe tip of the first bearing surface has the 'strongest' curvature. Nevertheless, in other embodiments, it may be the second bearing surface that has the 'strongest' curvature (i.e. the smaller radius of curvature): for example, the planar bearing surface (3) may be attached to the manipulator (9) and the glass rod and its spherically curved surface (2) may be disposed in the receptacle (1).

The first pressing member may comprise an elongated rod terminating at a rod end defining said first bearing surface.

The second pressing member (3) presents to the first pressing member (2) a planar external surface area (the flat surface of the glass slide) used as the first bearing surface. The manipulator is configured to translate the first pressing member (2) laterally across the external surface area to select a location thereupon to cause the first bearing surface to bear against the second bearing surface. Additionally, the manipulator is configured to translate the first pressing member (2) transversely towards or away from the external surface area to cause or cease the first bearing surface to bear against the second bearing surface (3). These three degrees of freedom of motion are schematically illustrated by the orthogonal set of three axes shown in Figure 2A and 2B.

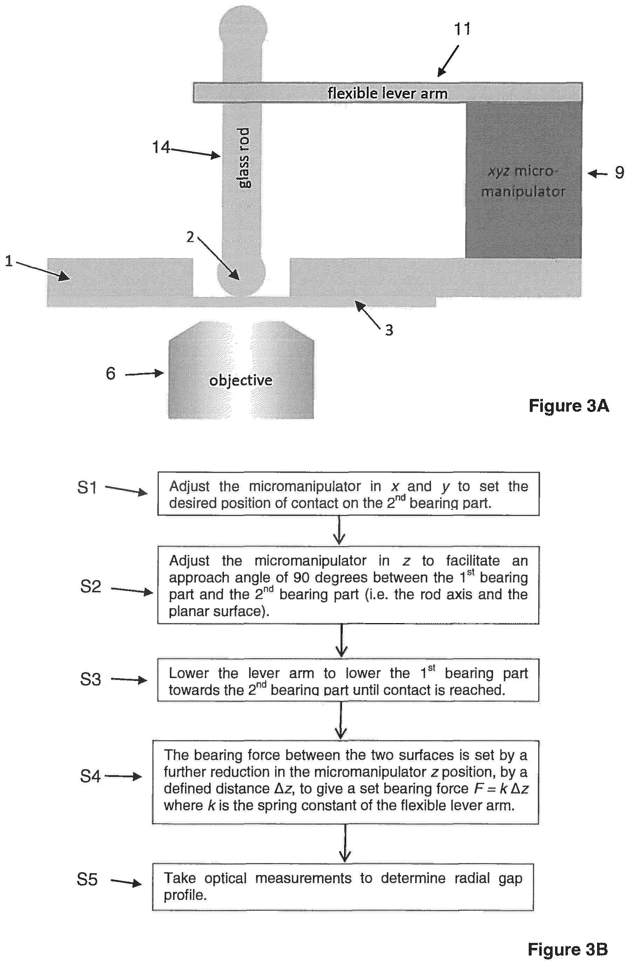

In the following schematic diagrams of Figures 3A, 4A, 5A, 6A and 7A, there is shown an SFA according to a respective one of several different embodiments of the invention, in combination with an optical microscope objective lens (6), such as is described above. These arrangements also include a probe light source which is not shown, for clarity, corresponding to the probe light source (4) illustrated in Figure 2A and 2B and described above. This probe light source is configured, in the following embodiments, to illuminate the interface between the first and second bearing surfaces, with probe light to generate a visible optical interference pattern created by the probe light at the interface. This probe light is then collected by the microscope objective lens (6) for use by the user.

Figure 3A schematically represents an SFA in combination with a microscope (not to scale) according to an embodiment of the invention. The SFA comprises a receptacle (1) for receiving a solvent fluid (the 'bulk' fluid of Figure 1B), and a first pressing member (2) disposed within the receptacle and having a spherically convex first bearing surface. The convex first bearing is configured to be coated by a first film of material (2A of Figure 1B) to be solvated by molecules in the solvent fluid. A second pressing member (3) has a second bearing surface which is substantially planar. This second bearing surface is also configured to be coated by a second film of material (the 'Film' 3A of Figure 1B) to be solvated by molecules in the solvent fluid. The second bearing surface is disposed within the receptacle to oppose the first bearing surface.

The manipulator (9) is coupled to the first pressing member and configured to apply an urging force to the first pressing member in the vertical direction to cause the first bearing surface to bear against the second bearing surface such that the first film and the second film are brought into contact to form an interface (23) which occupies a gap formed between the first and second bearing surfaces and which expels bulk solvent fluid. An objective lens (6) is arranged for use in forming an image of the interface. The first pressing member comprises a transparent glass rod terminated at each rod end with a hemispherical surface. The rod may be made of transparent glass. The manipulator comprises a flexible lever arm (11) the proximal end of which is non-rotatingly attached to the manipulator at one end of the lever arm, and the first pressing member rigidly attached to (adjacent) the distal end of the lever arm. The manipulator being configured to linearly translate the lever arm, via its proximal end, in any one of three orthogonal directions (xyz), relative to the second bearing surface.

Figure 3B schematically represents a sequence of steps in an example of the use of the SFA of the embodiment of the invention illustrated in Figure 3A, using the microscope. In particular, in the method, in a first step (S1), the user may adjust the micromanipulator in $x$ and $y$ to translate the position of the flexible lever arm (11) and the glass rod (14) and hemispherical rod end (first bearing surface, 2) to set the desired position of contact on the second bearing part (3). At a second step (S2), the user may adjust the micromanipulator in $z$ to vertically translate the first bearing surface (2) towards the second bearing surface (3) to facilitate an approach angle of 90 degrees between the first bearing surface and the second bearing surface (i.e. the rod axis 14 and the planar surface 3 are perpendicular). In a third step (S3), the user may control the manipulator such that the lever arm is lowered to cause the first bearing surface to contact the second bearing surface. In a fourth step (S4), the manipulator is further controlled to cause a predetermined bearing force (magnitude) to be generated between the two surfaces by a further reduction in the micromanipulator $z$ position, by a defined distance $\Delta z$, to give a set bearing force $F = k \Delta z$ where $k$ is the spring constant of the flexible lever arm. In a fifth step (S5), the user may take optical measurements, via the objective lens of an optical (e.g. confocal) microscope (6) to determine the radial gap profile formed between the first and second bearing surfaces subjected to the set bearing force.

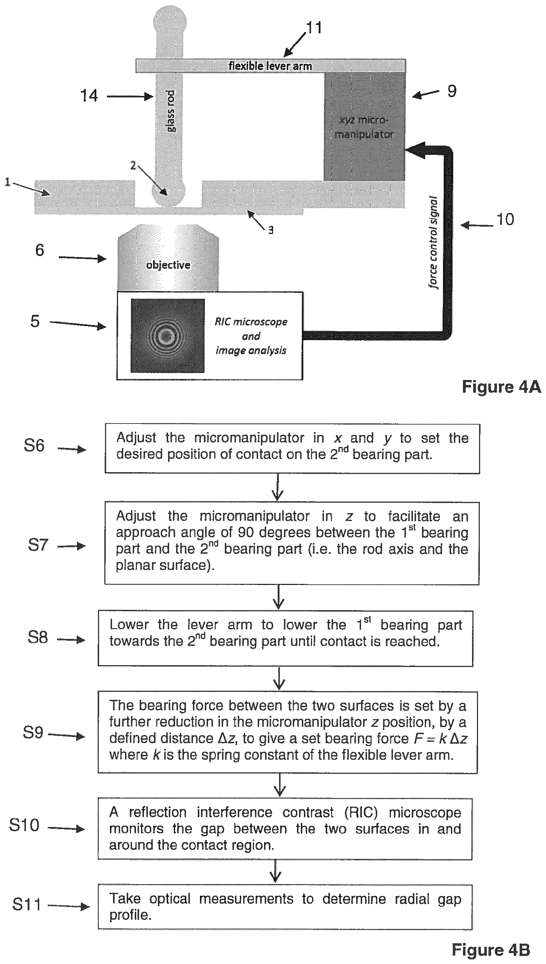

Figure 4A schematically represents an SFA in combination with a microscope (not to scale) according to an embodiment of the invention. The SFA comprises all of the elements described above with reference to Figure 3A, with the additional elements of a photodetector (e.g. camera) and data analysis unit (5) configured to image the RICM interference pattern generated by the light injected into the gap between the first and second bearing surfaces, and to apply an analysis algorithm to that pattern to calculate a force control signal (10) with which to control the transverse translation position (e.g. change by $\Delta z$) of the manipulator (9) thereby to control the z-position of the lever arm attached to the manipulator and, consequently the extent of flexure of the lever arm between the manipulator and the static pressing member (glass rod, 14). In accordance with the spring constant ($k$) of the lever arm, a change ($\Delta F = k \Delta z$) in the urging force is implemented.

Figure 4B schematically represents a sequence of steps in an example of the use of the SFA of the embodiment of the invention illustrated in Figure 4A, using the microscope. The steps S6 to S9 of Figure 4B are identical to steps S1 to S4 described above with reference to Figure 3B. In particular, in the method, in a first step (S6), the user may adjust the micromanipulator in $x$ and $y$ to translate the position of the flexible lever arm (11) and the glass rod (14) and hemispherical rod end (first bearing surface, 2) to set the desired position of contact on the second bearing part (3). At a second step (S7), the user may adjust the micromanipulator in $z$ to vertically translate the first bearing surface (2) towards the second bearing surface (3) to facilitate an approach angle of 90 degrees between the first bearing surface and the second bearing surface (i.e. the rod axis 14 and the planar surface 3 are perpendicular). In a third step (S8), the user may control the manipulator such that the lever arm is lowered to cause the first bearing surface to contact the second bearing surface. In a fourth step (S9), the manipulator is further controlled to cause a predetermined bearing force (magnitude) to be generated between the two surfaces by a further reduction in the micromanipulator $z$ position, by a defined distance $\Delta z$, to give a set bearing force $F = k \, \Delta z$ where $k$ is the spring constant of the flexible lever arm.

At step S10, the photodetector and data analysis unit (5) uses the detected reflection interference contrast (RIC) interference pattern analysis to monitor the geometry of the gap between the two bearing surfaces (2, 3) in and around the contact region. At step S11, the photodetector and data analysis unit (5) obtains, via its camera, optical measurements and from them applies an algorithm to determine the radial gap profile at the interface as well as force control signals with which to adjust the manipulator (9) as is described above with reference to Figure 2B.

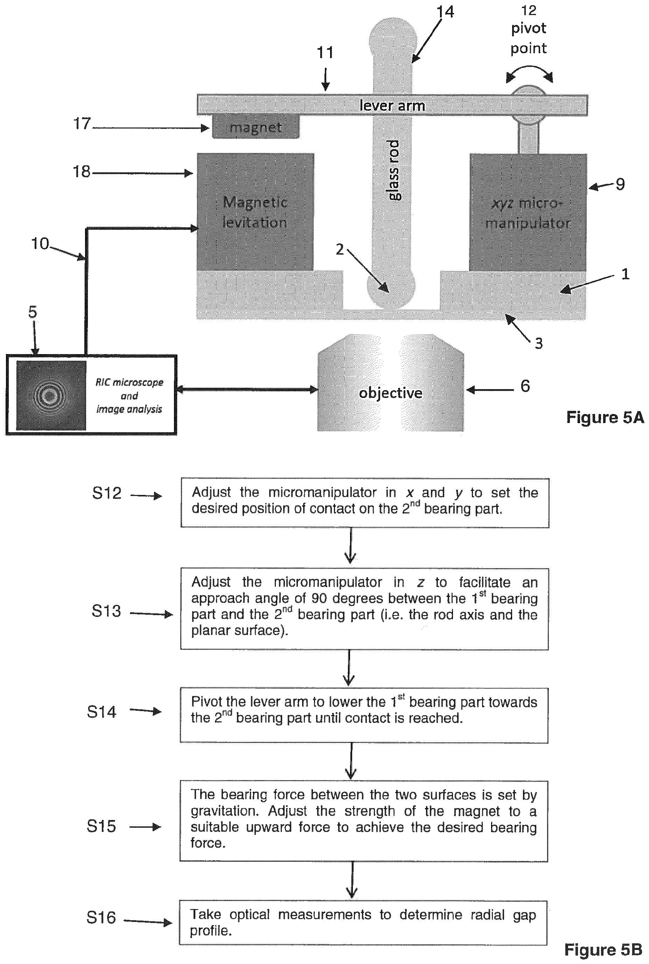

Figure 5A schematically represents an SFA in combination with a microscope (not to scale) according to an embodiment of the invention. The SFA comprises all of the elements described above with reference to Figure 4A, with the additional elements of: a pivot mechanism (12) via which the lever arm (11) is rotatingly coupled to the manipulator (9); and, a counter-torque assembly (17, 18) also coupled to the lever arm (11) for applying a counter-torque to the lever arm to counter the torque applied thereto by the weight of the glass rod (14). The photodetector and data analysis unit (5) is configured to send its force control signals not to the manipulator (as in Figure 4A) but, instead, to the counter-torque assembly (18) which is responsive to the force-control signals to apply a magnetic levitation force to the lever arm according to the force-control signals.

The lever arm is coupled to the manipulator via a pivot mechanism (12) providing a pivot point or fulcrum to which the weight of the glass rod (14) is arranged to apply, via the lever arm (11), a turning force (torque) directed towards the second bearing surface (3). Conversely, the magnetic levitation force of the counter-torque assembly is arranged to apply, via the same lever arm (11), a counter-torque to the pivot mechanism (12) to urge the lever arm to turn away from the second bearing surface. This urges the glass rod away from the second bearing surface. In alternative embodiments an electrical force (e.g. electrostatic, such as separated, opposing capacitor plates) may be used in place of the magnetic levitation force shown presently. The magnitude of the magnetic (or electrical) force is adjustable to adjust the value of the counter-torque. In this way, the counter-torque may be adjusted to adjust the net torque applied to the lever arm and, therefore, the value of the urging force applied by the pressing member attached to it.

The counter-torque assembly (17, 18) includes a first magnetic (or electrical) force unit (17) coupled to the lever arm (11), such as a permanent magnet (or a conductive first capacitor plate of a capacitor). A second magnetic (or electrical) force unit (18) of the counter-torque assembly is attached to the manipulator but is not coupled to the lever arm (11). The second magnetic (or electrical) force unit (18) is arranged to apply to the first magnetic (or electrical) force unit (17) a magnetic (or electrical) force directed to generate the counter-torque. The second magnetic force unit is, in this example, a magnetic levitation unit arranged to provide a magnetic field which acts to repel (e.g. opposite polarity) the first magnetic force unit. This may comprise an electromagnet the strength of which is controllable electrically, or a second permanent magnet the separation of which (from the first magnetic force unit) is controllably adjustable, e.g. mechanically. If an electrical force were to be used, the second electrical force unit may be e.g. a conductive second capacitor plate of the capacitor adapted to be charged with the same polarity of charge as the first capacitor plate of the capacitor.

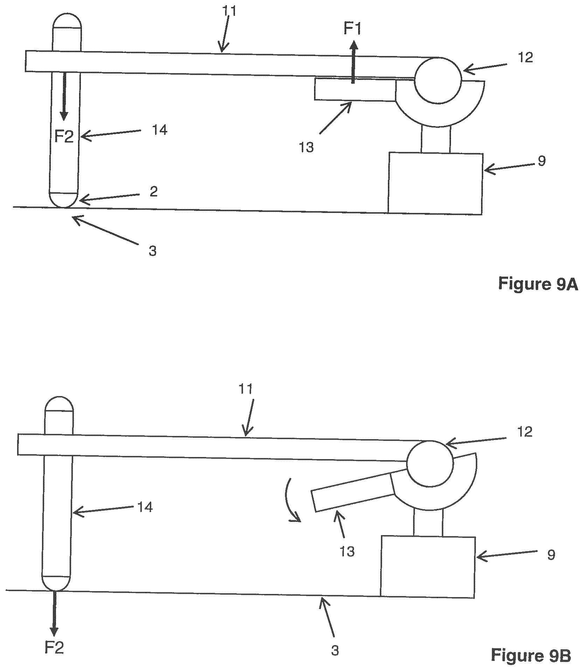

Figure 5B schematically represents a sequence of steps in an example of the use of the SFA of the embodiment of the invention illustrated in Figure 5A, using the microscope (6). The steps S12 to S13 of Figure 5B are identical to steps S6 to S7 described above with reference to Figure 4B. In particular, in the method, in a first step (S12), the user may adjust the micromanipulator in $x$ and $y$ to translate the position of the pivot point (12), and the lever arm attached to it, and the glass rod (14) and hemispherical rod end (first bearing surface, 2) to set the desired position of contact on the second bearing part (3). Although not shown in Figure 5A, the manipulator (9) comprises a lever arm support (13) as described below with reference to Figure 9A and Figure 9B, below. This ensures that translation of the pivot point (12) also translates the supported lever arm in the same way.

At a second step (S13), the user may adjust the micromanipulator in the z-direction to vertically translate the first bearing surface (2) towards the second bearing surface (3) to facilitate an approach angle of 90 degrees between the first bearing surface and the second bearing surface (i.e. the rod axis 14 and the planar surface 3 are perpendicular).

In a third step (S14), the user may control the lever arm support (13; see Figure 9B) of the manipulator such that the lever arm is rotated towards the second bearing surface to cause the first bearing surface to contact the second bearing surface.

In a fourth step (S15), the manipulator is consequently arranged, as a result of step S14, to cause a predetermined bearing force (magnitude and direction) to be generated between the two surfaces by action of the weight (gravity) of the glass rod (11). A further adjustment in the bearing force may then be made by adjusting the magnetic (or electrical) levitation force applied to the lever arm by the counter-torque assembly (17, 18), to give a set bearing force.

At step S16, the photodetector and data analysis unit (5) obtains, via its camera, optical measurements and from them applies an algorithm to determine the radial gap profile at the interface as well as force control signals with which to adjust the manipulator (9) as is described above with reference to Figure 2B.

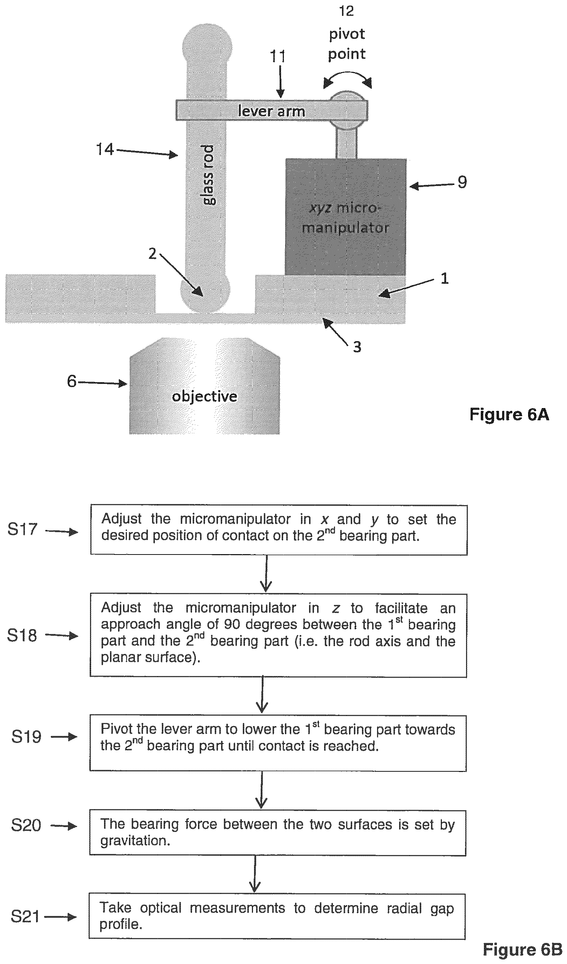

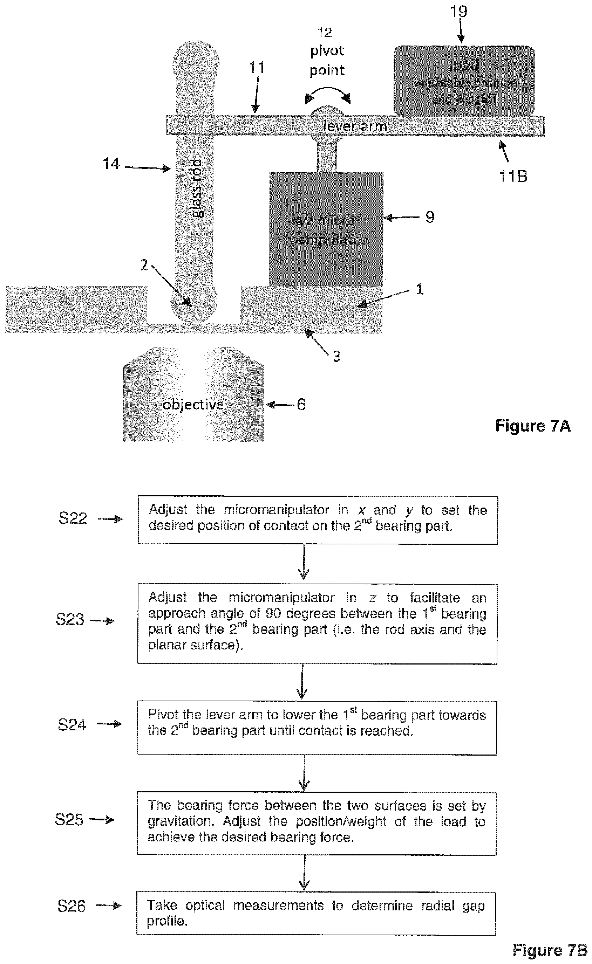

Figures 6A and 7A schematically show two further embodiments of the invention. In a first of these two examples (Fig. 6A) the lever arm comprises no counter-torque mechanism, whereas in the second example (Figure 7A), the lever arm (11) comprises a balance mechanism comprising a first lever arm part (11) to which the glass rod (14) is attached, and a second lever arm part (11B) to which a counter-weight (19) is coupled. The first and second lever arm parts are mutually rotatingly coupled to the pivot mechanism (12) to form a balance mechanism. The position along the second lever arm part at which the counter-weight is coupled to the second lever arm part, is adjustable to adjust the value of the counter-torque. In this way, by using gravity and the adjustable position of the counter-weight, one may adjust the net torque applied to the lever arm and, therefore, the value of the urging force applied by the pressing member attached to it.

Alternatively, in the example shown in Figure 6A, the lever arm part does not define a balance mechanism, and the glass rod pressing member (14) alone is coupled the lever arm which extends only to one side of pivot mechanism (12). Consequently, solely the weight of the glass rod (14) provides a turning torque to the pivot assembly and it is the weight of the glass rod, and its orientation as constrained by the lever arm and pivot mechanism (12) which determine the magnitude and direction of the urging force at the first and second bearing surfaces.

Figure 7B schematically represents a sequence of steps in an example of the use of the SFA of the embodiment of the invention illustrated in Figure 7A, using the microscope (6). The steps S22 to S23 of Figure 7B are identical to steps S6 to S7 described above with reference to Figure 4B. In particular, in the method, in a first step (S22), the user may adjust the micromanipulator in x and y to translate the position of the pivot point (12), and the lever arm attached to it, and the glass rod (14) and hemispherical rod end (first bearing surface, 2) to set the desired position of contact on the second bearing part (3). Although not shown in Figure 7A, the manipulator (9) comprises a lever arm support (13) as described below with reference to Figure 9A and Figure 9B, below. This ensures that translation of the pivot point (12) also translates the supported lever arm in the same way.

At a second step (S23), the user may adjust the micromanipulator in z to vertically translate the first bearing surface (2) towards the second bearing surface (3) to facilitate an approach angle of 90 degrees between the first bearing surface and the second bearing surface (i.e. the rod axis 14 and the planar surface 3 are perpendicular).

In a third step (S24), the user may control the lever arm support (13; see Figure 9B) of the manipulator such that the lever arm is rotated towards the second bearing surface to cause the first bearing surface to contact the second bearing surface.

In a fourth step (S25), the manipulator is consequently arranged, as a result of step S14, to cause a predetermined bearing force (magnitude and direction) to be generated between the two surfaces by action of the weight (gravity) of the glass rod (11). A further adjustment in the bearing force may then be made by adjusting the position and/or load/weight of the counter-weight (19) thereby to adjust the counter-torque applied by it to the pivot point (12), to give a set bearing force.

At step S26, the optical measurements are taken and to them an algorithm is applied to determine the radial gap profile at the interface. A calculation of the urging force may be made using the optical measurements, with which to adjust the position of the counter-weight thereby to adjust the urging force (and the gap geometry it creates) as necessary, is described above. In other embodiments, a photodetector and data analysis unit may be included (not shown; e.g. item 5; Fig.2B) to perform these measurements and calculations.

Referring to Figure 6B, the method of use of the SFA illustrated in Figure 6A is shown. Here, steps S17, S18, S19 and S21, are the same as steps S22, S23, S24 and S26 described above with reference to Figure 7B. Step S20 omits the actions of step S25 relating to the adjustment of the position and/or load of the counter-weight referred to in the latter. Although not shown in Figure 7A, the manipulator (9) comprises a lever arm support (13) as described below with reference to Figure 9A and Figure 9B, below. This ensures that translation of the pivot point (12) also translates the supported lever arm in the same way.

In more detail, Figure 9A and 9B schematically illustrate the manipulator (9) including a lever arm support part (13) which is pivotingly attached to the manipulator (9) but is separate from the pivot mechanism (12). The support part (13) is adapted to support the lever arm (11) in a horizontal quiescent state when no bearing force is applied between the first bearing surface (2) and the second bearing surface (3). The support part is configured to support the lever arm part at a location there along which is between the pivot mechanism (12) and the glass rod (14) attached to the distal end of the lever arm, as shown in Figure 9A. Accordingly, a reaction force (F1) is applied by the upper surface of the support part to the underside of the lever arm adjacent to its proximal end. This reaction force balances the turning force (F2) applied to the lever arm (1) by the weight of the glass rod (14) attached to its distal end.

The support part (13) is configured to rotate relative to the lever arm (and relative to the manipulator) to freely separate from the lever arm (11) to cease support of the lever arm when the first bearing surface (2) and second bearing surface (3) bear against each other as shown in Figure 9B. Accordingly, in this state it is the reactive force supplied by the bearing force which is used to counteract/support the weight of the pressing member and lever arm part at the interface between the bearing surfaces.

For example, the lever arm support part is rotatingly coupled to the manipulator and configured to controllably rotate whilst supporting the weight of the lever arm part which passively/freely pivots in sympathy about the pivot mechanism (12), in its quiescent state, whilst the lever arm support rotates in this way. If the controlled rotation of the lever arm support is such as to bring the first and second bearing surfaces to urge against each other, then once the urging force is created a continued rotation of the lever arm support part causes it to freely separate from the underside of the lever arm part. This mechanism and method allows gravity to provide the necessary/desired urging force via a passive rotation of the lever arm about the pivot axis of the pivot mechanism (12), without applied rotational forces being used to rotate the lever arm part. Applied rotational forces may accidentally add undesirably to the urging force in an uncontrolled way, rendering it more difficult to maintain in a static and constant urging force. The reverse direction of rotation may subsequently bring the lever arm support part back into contact (support) with the lever arm part to separate the first and second bearing surfaces in a controlled way.

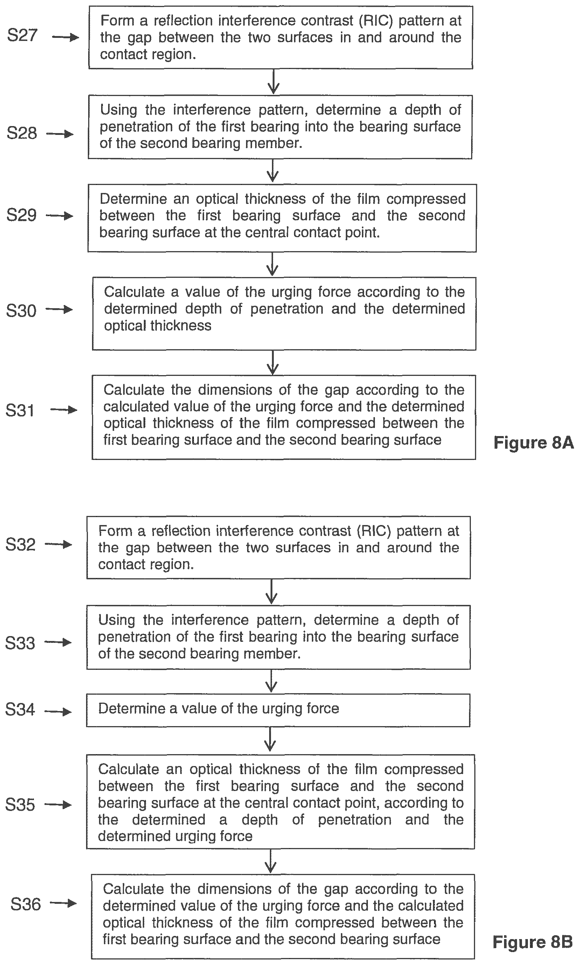

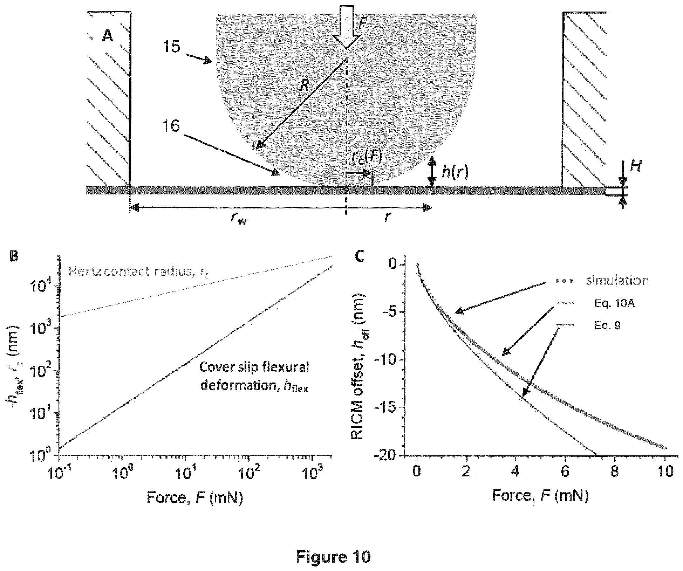

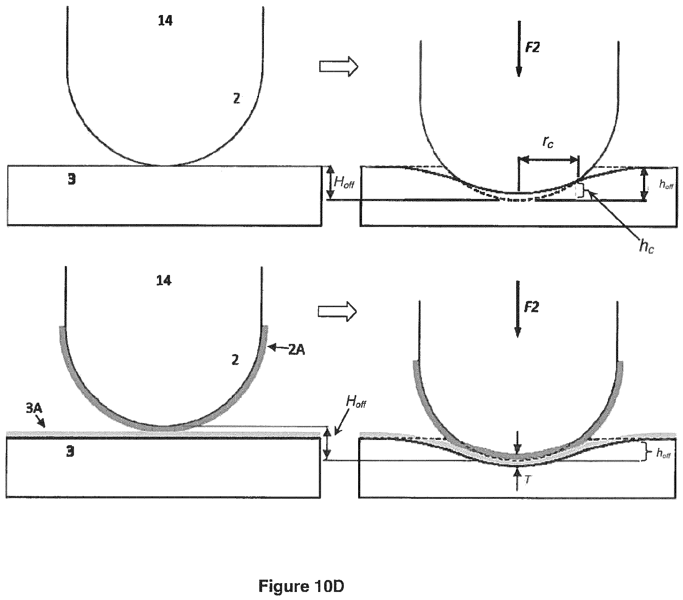

Figures 8A and 8B each illustrate steps in a respective one of two different algorithms, which will now be described with reference to the geometry of the interface as schematically shown in Figure 10A, and schematically in exaggerated form in Figure 10D.

Tuning first to Figure 10D, this shows schematic representations of the contact/interface region. In the representation at the bottom right, a first film (2A) of material upon the first bearing surface (2) of the first pressing member (the hemispherical end of glass rod, 14) and a second film (3A) of the same material upon the planar second bearing surface (3) are compressed between two bearing surfaces by the applied bearing force (F2). The representation at the bottom left shows the same scenario before a bearing force is applied. The representations at the top show simplified scenarios in the absence of the films (2A and 3A), and are added for illustrative purposes. In the representations on the right, solid lines depict the shapes of the first and second bearing surface after compression, whereas the dashed lines depict the un-deformed shapes. A deformation of both the hemispherical first bearing surface and the planar second bearing surface takes place. In brief, the hemispherical first bearing surface to some extent 'flattens' while remaining convex, and the planar second bearing surface develops a concave depression in its surface which mirrors the convexity of the first bearing surface pressing it. The vertical offset ($h_{off}$) of the un-deformed tip of the first bearing surface from the adjacent un-deformed planar second bearing surface is shown. The vertical change ($H_{off}$) of the un-deformed tip upon application of the bearing force (F2) is also shown. In the absence of a first and second film (2A, 3A), $h_{off} = H_{off}$. Given a combined vertical thickness (T) for the compressed first and second films (2A, 3A), the following relation holds:

$$h_{off} = H_{off} + T$$

Here, $H_{off}$ is negative (<0) while $T$ is positive (>0), such that $h_{off}$ is negative (<0) if $T < H_{off}$.

As is discussed in more detail below, with reference to a specific example of use of the invention, the phase of a measured RICM interference pattern generated at the interface formed by the bearing surfaces, can be expressed as:

$$\phi(r, r_c) = \frac{4n}{\lambda R}\left[(r^2 - 2r_c^2)\left(\frac{\pi}{2} - arcsin\frac{r_c}{r}\right) + r_c\sqrt{r^2 - r_c^2}\right]$$

Here R is the radius of hemispherical curvature of the un-deformed tip of the first bearing surface (2), $n$ is the refractive index of the bulk solution which solvates the first and second films (2A, 3A) for a wavelength $\lambda$ of light used to generate the interference pattern, and r is the radial distance (parallel to the un-deformed plane of the second bearing surface) from the tip of the first bearing surface. The quantity $r_c$ is the radius of the contact interface between the two films (2A, 3A). By considering the parts of the RICM interference that are far from the contact point, which comprises the great majority of the structure/oscillations of the interference pattern, then we have $r \gg r_c$ and the above equation reduces to:

$$\phi(r, r_c) \approx \frac{2\pi n}{\lambda R}(r^2 - 2r_c^2)$$

The radial profile/variation of a vertical height, $h(r) = r^2/R$ (for $r \gg r_c$), of the gap between the opposing surfaces of the first and second bearing surfaces, which is occupied by the two films (2A, 3A) of material, can be understood from the equation for the RICM phase, as follows:

$$\phi(r, r_c) \approx \frac{4\pi n}{\lambda}(h(r) - h_{off})$$

The quantity $h_{\text{off}} = r_c^2/R$, which is schematically shown in Figure 10D, is a constant that represents a vertical offset to the radial profile/variation of a vertical height $h(r)$. It is approximately twice the height $h_c \approx r_c^2/2R$ as illustrated in Fig. 10D, top right,

The inventors have found that the quantity $h_{\text{off}}$ can be determined accurately according to an equation of the following form:

$$h_{\text{off}} = f(T, n_{\text{film}}, n_{\text{solv}}) - g(F)$$

Here, $f$ is a function of total thickness of the compressed films ($T$) as shown in Figure 10D (bottom right), and the refractive indices of the films ($n_{\text{film}}$: 2A, 3A) and of the bulk solvent ($n_{\text{solv}}$). The quantity $g(F)$ is a function whose value varies according to the magnitude of the urging force, $F$. The function $f$ may take the form:

$$f(T, n_{\text{film}}, n_{\text{solv}}) = \frac{1}{n_{\text{solv}}} \int_0^T n_{\text{film}}(h)\,\mathrm{d}h$$

Here, $n_{\text{film}}(h)$ takes account of spatial variation of the refractive index of the film material, and $\int_0^T n_{\text{film}}(h)\,\mathrm{d}h$ is the optical thickness over the optical path of the light passing through it along the gap height direction, $h$. For example, if there is no height variation in $n_{\text{film}}$ then the optical thickness is $n_{\text{film}}T$ and he above equation simply reduces to:

$$f(T, n_{\text{film}}, n_{\text{solv}}) = \frac{n_{\text{film}}}{n_{\text{solv}}} T$$

The function $g(F)$, may take the form:

$$g(F) = \beta F^{\frac{2}{3}} \left(1 + \gamma F^{\frac{2}{3}}\right)$$

Here $\beta$ and $\gamma$ are calibration constants which may be determined empirically. Examples are given below, but the generality of the above functional form is not limited to those example values.

Algorithms for determining the gap profile geometry, in the radial direction from the centre of the contact region at the interface, are as follows.

Referring to Figure 8A, a first algorithm comprises steps as follows.

In a first step (S27), a reflection interference contrast (RIC) pattern is formed at the gap between the two bearing surfaces in and around their contact region.

In a second step (S28), the interference pattern is used to determine an effective depth of penetration, $h_{\text{off}}$, of the first bearing surface into the bearing surface of the second bearing member. This is done by fitting (e.g. least-squares numerical fitting or other known technique) the RICM interference pattern intensity profile/waveform to the following equation.

$$\phi(r, r_c) \approx \frac{4\pi n}{\lambda}\left(h(r) - h_{\text{off}}\right)$$

In a third step (S29), an optical thickness, $n_{\text{film}}T$, is determined for the film compressed between the first bearing surface and the second bearing surface at the central contact point. This optical thickness may be previously provided by any suitable measurement method or estimation method readily available to the person of skill in the art.

In a fourth step (S30), a value of the urging force, $F$, is calculated according to the determined effective depth of penetration and the determined optical thickness, $T$, by solving the expression $h_{\text{off}} = f(T, n_{\text{film}}, n_{\text{solv}}) - g(F)$, for $F$. That is to say, with $h_{\text{off}}$ and $f$ to hand, the value of $F$ can be calculated.

In a fifth step (S31), the dimensions, $h(r,F)$, of the gap are calculated according to the calculated value of the urging force, $F$, the radius of curvature of the first bearing surface, $R$, and the elastic properties of the materials of the two bearing surfaces (e.g. glass), $E^*$. The expressions of equation [4] and of equation [6A] herein (see below):

$$r_c = \left(\frac{3FR}{4E^*}\right)^{\frac{1}{3}}$$

where,

$$\frac{1}{E^*} = \frac{1-v_1^2}{E_1} + \frac{1-v_2^2}{E_2}$$

in which $v_i$ and $E_i$ are the Poisson ratios and the Young's moduli, respectively, of the first bearing surface ($i = 1$) and the second bearing surface ($i = 2$), and,

$$h(r,F) = \begin{cases} 0 & , r \leq r_c \\ \frac{1}{\pi R}\left[(r^2 - 2r_c^2)\left(\frac{\pi}{2} - \arcsin\frac{r_c}{r}\right) + r_c\sqrt{r^2 - r_c^2}\right] & , r > r_c \end{cases}$$

are used to determine $h(r,F)$. Finally, the value of $h(r,F)$ is off-set according to the optical thickness, $T$, previously determined for the film compressed between the first bearing surface and the second bearing surface at the central contact point, as follows:

$$h(r,F) \to h(r,F) + T$$

This provides the gap profile geometry, in the radial direction from the centre of the contact region at the interface.
Referring to Figure 8B, a second algorithm, as an alternative to the first algorithm, comprises steps as follows.
In a first step (S32), a reflection interference contrast (RIC) pattern is formed at the gap between the two surfaces in and around the contact region.
In a second step (S33), the interference pattern is used to determine an effective depth of penetration, $h_{off}$, of the first bearing surface into the bearing surface of the second bearing member. This is done by fitting (e.g. least-squares numerical fitting or other known technique) the RICM interference pattern intensity profile/waveform to the following equation.

$$\phi(r,r_c) \approx \frac{4\pi n}{\lambda}\left(h(r) - h_{off}\right)$$

In a third step (S34), a value of the urging force is determined, or may be previously determined. For example, this may simply be estimated according to the known position (z-axis) properties of the manipulator (9), the lever arm (11) and the first urging member (14). In particular, if gravity is used to generate the urging force, as described in examples discussed above, then the urging force may be estimated from the geometry of the SFA and weight of its relevant components. Alternatively, if a resiliently deformable/flexible lever arm is used (see Figs. 2A, 2B, 3A, 4A), then the force may be determined from the spring constant of the lever arm and its known state of flexure, as discussed above.
In a fourth step (S35), a thickness, $T$, is calculated for the film compressed between the first bearing surface and the second bearing surface at the central contact point, according to the determined depth of penetration and the determined urging force, $F$. This is calculated according by solving the expression $h_{off} = f(n_{film}, n_{solv}, T) - g(F)$, for $T$. That is to say, with $h_{off}$, $n_{film}$, $n_{solv}$ and $F$ to hand, the value of $T$ can be calculated.
In a fifth step (S36), the dimensions, $h(r,F)$, of the gap are calculated according to the calculated value of the urging force, $F$, the radius of curvature of the first bearing surface, and the elastic properties of the materials of the two bearing surfaces (e.g. glass), $E^*$. The expressions of equation [4] and of equation [6A] herein (see below):

$$r_c = \left(\frac{3FR}{4E^*}\right)^{\frac{1}{3}}$$

where,

$$\frac{1}{E^*} = \frac{1-v_1^2}{E_1} + \frac{1-v_2^2}{E_2}$$

in which $v_i$ and $E_i$, are the Poisson ratios and the Young's moduli, respectively, of the first bearing surface ($i$ = 1) and the second bearing surface (i= 2), and,

$$h(r,F) = \begin{cases} 0 & ,r \leq r_c \\ \frac{1}{\pi R}\left[(r^2 - 2r_c^2)\left(\frac{\pi}{2} - \arcsin\frac{r_c}{r}\right) + r_c\sqrt{r^2 - r_c^2}\right] & ,r > r_c \end{cases}$$

are used to determine $h(r,F)$. Finally, the value of $h(r,F)$ is off-set according to the optical thickness, $T$, previously determined for the film compressed between the first bearing surface and the second bearing surface at the central contact point, as follows:

$$h(r,F) \rightarrow h(r,F) + T$$

This provides the gap profile, in the radial direction from the centre of the contact region at the interface.

In this way, the invention provides a reflection interference contrast microscope comprising the optical microscope described above, employing the present technique of confinement of a sample film(s) between two opposing surfaces using an SFA.

In the following, the geometry of the contact interface between the first and second bearing surfaces is discussed in more detail, and an example of the use of the optical interference pattern formed there is explained in terms of calculating a profile of the gap size at the interface.

*Geometry of the interface*

The geometry of the interface is schematically shown in Figure 10A, and schematically in more detail and different scenarios in Figure 10D. In the absence of force applied by the sphere, the cover slip is ideally flat ($h_1(r)$ = 0) and the end of the rod is ideally spherical ($h_2(r)$ = $R$ - $\sqrt{R^2 - r^2}$ ).

Because the radius of the sphere is large compared to the size of the area of interest in the image, the shape of the sphere can be approximated by a parabola for RICM intensity calculation ($h_2(r) \approx r^2/2R$) and 'nonlocal' curvature effects can be neglected.

The phase in the RICM profile can thus be written as:

$$\Phi(r) = \frac{2\pi n}{\lambda} \times 2 \times \frac{r^2}{2R}$$

[1]

where n is the refractive index of the medium between the surfaces and $\lambda$ is the wavelength of light. Here any defocus is neglected as only very large changes in focus would modify the RICM pattern (*vide infra*).

Applying a force $F$ on the sphere, two effects will modify the geometry of the setup. The cover slip will flex at large scale. The change in height due to flexural deformation is

$$h_{\text{flex}}(r) = -\frac{F}{16\pi D}\left(r_{\text{w}}^2 - r^2 + 2r^2 \ln\frac{r}{r_{\text{w}}}\right),$$

[2]

where

$$D = E_1 H^3 / [12(1 - v_1^2)]$$

is the flexural rigidity of the cover slip along with its Young's modulus $E_1$, Poisson ratio $v_1$ and thickness $H$. This equation assumes a point-like contact which is not valid around the contact area but gives a good order of magnitude of the large scale deformation. In particular, the maximum deformation is located at the centre of the cover slip and scales as

$$h_{\text{flex}}(0) = -\frac{F r_{\text{w}}^2}{16\pi D}.$$

[3]

With $E_1$ = 72.9 GPa, $v_1$ =0.208 and $H$ = 175 μm, we obtain $D$ = 0.034 Pa·m³.

As shown in Figure 10B (lower line), this deformation is of small amplitude ($h_{\text{flex}}$ < 120 nm) for $F \leq$ 10 mN. Moreover, this small amplitude is applied over a large distance ($r_{\text{w}}$ = 5 mm >> 100 μm, over which the RICM pattern is observed). Hence the contribution of the flexural deformation to the change in the RICM pattern can be neglected. At smaller scale around the contact point, both surfaces are deformed and this deformation can be described by Hertz's theory. Figure 10B, shows that this deformation is much more significant, and hence it is the only one considered in the following.

*Hertz contact deformation of the surfaces and resulting RICM pattern*

Upon application of a bearing force $F$, both surfaces are deformed around the contact point and this deformation can be described by Hertz's theory. According to Hertz contact mechanics, when applying a force $F$, both the sphere and the coverslip will deform to give rise to a contact area of radius:

$$r_{\text{c}}(F) = \left(\frac{3FR}{4E^*}\right)^{1/3}$$

[4]

Here,

$$\frac{1}{E^*} = \frac{1-v_1^2}{E_1} + \frac{1-v_2^2}{E_2}$$

where $v_i$ and $E_i$ are the Poisson ratios and the Young's moduli, respectively, of the cover slip ($i$ = 1) and the rod ($i$ = 2). Outside the contact area, the deformations are:

$$\delta h_1(r) = \frac{E^*}{\pi R}\frac{1-v_1^2}{E_1}\left[(2r_c^2 - r^2)\arcsin\frac{r_c}{r} + r_c\sqrt{r^2 - r_c^2}\right]$$

[5A]

and

$$\delta h_2(r) = \frac{E^*}{\pi R} \frac{1-v_2^2}{E_2} \left[ (2r_c^2 - r^2) \arcsin \frac{r_c}{r} + r_c \sqrt{r^2 - r_c^2} \right]$$

[5B]

The gap distance is

$$h(r,F) = \begin{cases} 0 & , r \le r_c \\ \frac{1}{\pi R} \left[ (r^2 - 2r_c^2) \left( \frac{\pi}{2} - \arcsin \frac{r_c}{r} \right) + r_c \sqrt{r^2 - r_c^2} \right] & , r > r_c \end{cases}$$

[6A]

and hence the RICM phase becomes

$$\Phi(r,F) = \begin{cases} 0 & , r \le r_c \\ \frac{4n}{\lambda R} \left[ (r^2 - 2r_c^2) \left( \frac{\pi}{2} - \arcsin \frac{r_c}{r} \right) + r_c \sqrt{r^2 - r_c^2} \right] & , r > r_c \end{cases}$$

[6B]

From Figure 10B, we can estimate that $r_c$ is in the micrometre range for applied forces in the mN range. A good approximation of the RICM pattern is then obtained by looking at the limit $r \gg r_c$. In this case one obtains

$$\Phi(r,F) = \frac{2\pi n}{\lambda R} (r^2 - 2r_c^2) \quad , r \gg r_c$$

[7]

Fitting this phase with a quadratic formula including a constant offset $2h_{off}$ (for the additional path length of the reflected light) one thus gets

$$h_{\text{off}} \approx -\frac{r_c^2}{R} \approx -\left( \frac{3F}{4E^* \sqrt{R}} \right)^{2/3}$$

[8]

Using $R = 3$ mm, $E_1 = 72.9$ GPa, $v_1 = 0.208$, $E_2 = 64$ GPa and $v_2 = 0.2$, one gets E*= 35.56 GPa and

$$h_{\text{off}} \approx -5.3 \text{ nm} \times \left( \frac{F}{\text{mN}} \right)^{2/3}$$

[9]

The above analysis is confirmed by a more rigorous fitting of the RICM profile derived from the exact expression of the phase (Eq. 6). The results are shown in Figure 10C, (dots). For small forces ($F < 1$ mN), Eq. 9 fits the simulation well (Fig.10C, lower line). For larger forces, there is a deviation and the simulation is better fitted by the formula (Fig.10C, upper line)

$$h_{\text{off}} \approx -5.03 \text{ nm} \times \left( \frac{F}{\text{mN}} \right)^{2/3} \times \left[ 1 - 0.039 \left( \frac{F}{\text{mN}} \right)^{2/3} \right]$$

[10A]

with an error of less than 0.02 nm across $0 < F < 10$ mN. The simulations also showed that the fit is robust to small errors (a few percent) in $R$ as well as to small differences (a few $\mu$m) between the upper surface of the cover slip and the imaging plane (data not shown).

The above analysis was performed for two glass surfaces in direct contact. Equivalent simulations with a 6 nm thick interlayer of $n$ = 1.47 (i.e., the equivalent of two Nsp1 films considering also the EDTA surface functionalisation, *vide infra*) were well fitted by

$$h_{\text{off}} \approx 6 \text{ nm} \times \frac{1.47}{1.334} - 5.06 \text{ nm} \times \left(\frac{F}{\text{mN}}\right)^{2/3} \times \left[1 - 0.030 \left(\frac{F}{\text{mN}}\right)^{2/3}\right] \quad [10\text{B}]$$

with an error of less than 0.25 nm across 0 < $F$ < 10 mN.

*Determination of the compressive force and interface geometry from RICM.*

Using Eqs. 10 one can readily estimate the compressive force from experimentally measured RICM heights. Eqs. 4 and 5 then provide the geometry of the sphere-plane interface for any given applied force. We note here that the additional polymer (e.g. Nsp1) interlayer affects the shape the $h_{\text{off}}(F)$ curve only marginally. From a comparison of Eq. 10B with Eq. 10A, it is clear that there is a positive constant offset of 6 nm x 1.47/1.334 $\approx$ 6.6 nm to $h_{\text{off}}$. Any additional change in $h_{\text{off}}$, however, is marginal: over the relevant force range of 10 mN, it remains below 1 nm. For simplicity, we have neglected the additional change, as it is below the resolution limit of $h_{\text{off}}$ in the present setup, but did take into account the constant offset when calculating the applied force from RICM data.

From the above analysis (Fig. 10C) one can calculate the forces at play for 'soft' contact ($h_{\text{off}} \approx$ 5 nm, $F \approx$ 1 mN), 'medium' contact ($h_{\text{off}} \approx$ 10 nm, $F \approx$ 3 mN) and 'hard' contact ($h_{\text{off}} \approx$ 17 nm, $F \approx$ 8 mN). These values correspond to contact radii $r_{\text{c}}(F)$ of roughly 4, 6 and 8 $\mu$m.

*Estimate of compressive forces between sphere and plane*

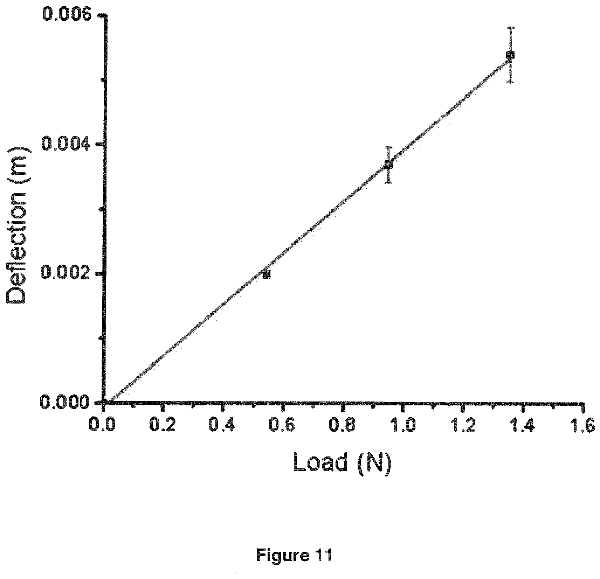

As an alternative to the above, we also considered the mechanics of our system to obtain a rough estimate of the applied forces. Whilst the setup as a whole is mechanically complex, we recognised that the lever arm that connects the rod to the micromanipulator is likely to be the most compliant element. We determined the spring constant of the lever arm to be $k \approx$ 250 N/m using linear regression analysis of its deformation under the load of a set of defined weights (Fig.11). With this lever spring constant, a lever deflection of 16 $\mu$m (i.e. from 'soft' to 'hard' contact) corresponds to a difference in force of 4 mN. The order of magnitude compares favourably with the RICM analysis which gave 7 mN over the same range. These values are in reasonable agreement if one considers a resolution limit of $\pm$ 2 nm in the $h_{\text{off}}$ determination.

*Polymer film thickness under strong compression*

The FG domains of Nsp1 are intrinsically disordered polypeptide (i.e. polymer) chains. In our example, these were grafted with one end to a surface forming a polymer brush. Upon compression, solvent is squeezed out of the Nsp1 brush, and in the limit of very strong compression it can be expected that the Nsp1 fbrush resembles a virtually solvent-free and incompressible polymer melt. With a grafting density $\Gamma$ = 5 $\pm$ 1 pmol/cm$^2$, a molecular weight $M_{\text{w}}$ = 64.1 kDa of Nsp1 FG domains, and an effective density $\rho$ = 1.4 g/cm$^3$ for the compacted polypeptide, we find that the fully compressed film has a thickness of $d_{\text{min}}$ = $\Gamma M_{\text{w}}/\rho$ = 2.3 $\pm$ 0.5 nm.

To estimate the force required for full compression, we consider the osmotic pressure $\Pi_{\text{osm}}$ of a polymer solution according to Flory-Huggins:

$$\frac{\Pi_{\text{osm}} a^3}{k_{\text{B}} T} = -\ln(1 - \varphi) - \varphi - \chi \varphi^2 \quad [11]$$

where $k_B T$ is the thermal energy, $a$ the Kuhn segment length, $\chi$ the Flory interaction parameter, and $\varphi$ the polymer volume fraction. The entropy of polymer mixing was here neglected since the polymer chains are confined through grafting. In the limit of strong compression $\varphi$ is approximately constant across the brush, and relates to the brush thickness $d$ as:

$$\varphi = \frac{d_{\min}}{d}$$

[12]

In our experiments a force $F$ is applied and brushes are confined between a spherical and a planar surface.
This can be translated into an equivalent pressure in the geometry of two parallel planar surfaces using Derjaguin's approximation:

$$\Pi = \frac{1}{2\pi R}\frac{\mathrm{d}F}{\mathrm{d}d}$$

[13]

where $R$ is the radius of the sphere. Balancing external and osmotic pressures ($\Pi_{\mathrm{osm}} = \Pi$) results in

$$\frac{\mathrm{d}F}{\mathrm{d}d} = \frac{2\pi R k_{\mathrm{B}}T}{a^3}\left[-\ln\left(1 - \frac{d_{\min}}{d}\right) - \frac{d_{\min}}{d} - \chi\left(\frac{d_{\min}}{d}\right)^2\right]$$

[14]

Integration of Eq. 14 gives

$$F = \frac{2\pi R k_{\mathrm{B}}T}{a^3}\int_d^\infty \left[-\ln\left(1 - \frac{d_{\min}}{x}\right) - \frac{d_{\min}}{x} - \chi\left(\frac{d_{\min}}{x}\right)^2\right]\mathrm{d}x$$

$$= \frac{2\pi R k_{\mathrm{B}}T}{a^3}\left[(d - d_{\min})\ln\left(1 - \frac{d_{\min}}{d}\right) + d_{\min} - \chi\frac{d_{\min}^2}{d}\right]$$

[15]

In the limit of $d \to d_{min}$

$$F = \frac{2\pi R k_{\mathrm{B}}T}{a^3}d_{\min}(1 - \chi)$$

[16]

With $a = 0.76$ nm for polypeptide chains, $R = 3$ mm and $\chi > 0$, we find that the brush becomes fully compressed at forces $F > 0.4$ mN. Since PSCM operates at forces in the mN range, we can thus conclude that the brush becomes fully compressed in the centre of the sphere-plane contact area.
The total thickness of the fully compressed organic/polymer film, made from two apposed brushes of Nsp1 FG domains and the EDTA surface functionalization (*vide infra*), is 6 nm.
Figure 10 shows a RICM and Hertzian analysis of a sphere pressing on a planar surface, as discussed above. Figure 10A shows a schematic of the interface geometry: the planar glass cover slip (#1.5 with thickness H = 175 $\pm$ 15 $\mu$m) is glued to the sample holder (and hence fixed at the edges) defining a well of radius $r_w$ = 5 mm; the spherical end of a glass rod (radius $R$ = 3 mm) presses with a force $F$ at the centre of the cover slip; the area of contact between the two surfaces is a disk of radius $r_c$, and the distance h between the plane and the sphere increases with the distance $r$ from the centre of the contact area. Figure 10B shows the amplitude of deformation, as a function of applied force, of the whole cover slip (blue line) and of the two surfaces around the contact area (orange line). Figure 10C shows simulated RICM offset ($h_{\mathrm{off}}$) vs force ($F$) applied (grey dots), and fits with Eq. 9 (lower line) and Eq. 10A (upper line).
Figure 11 shows a spring constant of a lever arm (item 11, Fig.3A) of the manipulator of an embodiment of the invention. Deflection vs. load of the lever arm holding the glass rod, is shown. The loads were applied by attaching weights to the lever arm, and deflections were measured with a ruler. Symbols with errors represent mean and standard deviation of 5 replicas. The red line is the best fit with a line giving k = 249 $\pm$ 6 N/m.

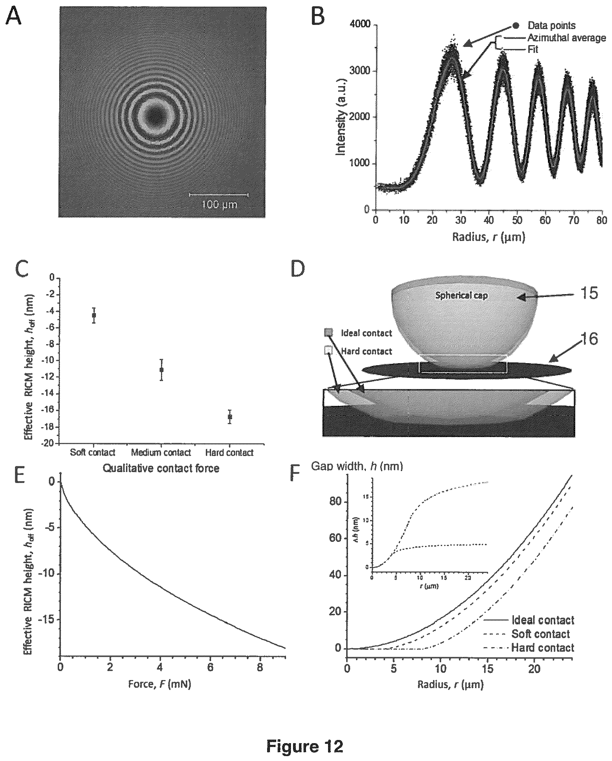

Figure 12A shows a representative RIC micrograph of a spherically-curved surface (glass rod tip) pressing on a planar surface (a glass cover slip). Conditions: 'soft' contact, $\lambda$ = 633 nm. Figure 12B shows a radial intensity profile extracted from Fig. 12A (black dots), azimuthally averaged and fitted with an optical model assuming perfect plane-sphere geometry (solid line).

Figure 12C shows an effective RICM height at the centre as a function of the quality of the contact, here operationally defined as 'soft' (corresponding to a few $\mu$m of micromanipulator z motion following initial contact), 'medium' (~8 $\mu$m) and 'hard' (~16 $\mu$m) contact. Data points represent mean $\pm$ standard deviation of five measurements with bare surfaces.

Figure 12D is a schematic representation of the contact geometry corresponding to an ideal plane-sphere interface (yellow spherical cap) and a harder contact (transparent grey spherical cap). In the latter case, both surfaces are deformed at the interface.

Figure 12E shows an effective RICM height versus compressive force predicted from the Hertz contact model considering the geometries and mechanical properties of the glass rod and the cover slip. The curve is for two bare surfaces; if a polymer film is present between the surfaces then the effective RICM height can be increased by the optical thickness of the fully compressed polymer film to a good approximation.

Figure 12F shows a gap distance as a function of the distance from the centre for 'soft' ($F$ = 1 mN; dashed line) and 'hard' (8 mN; dash-dotted line) contact; the idealized case of a perfect plane-sphere contact (solid line) is also shown for comparison. The inset shows the difference in gap distance between the soft and hard contacts compared to the ideal contact.

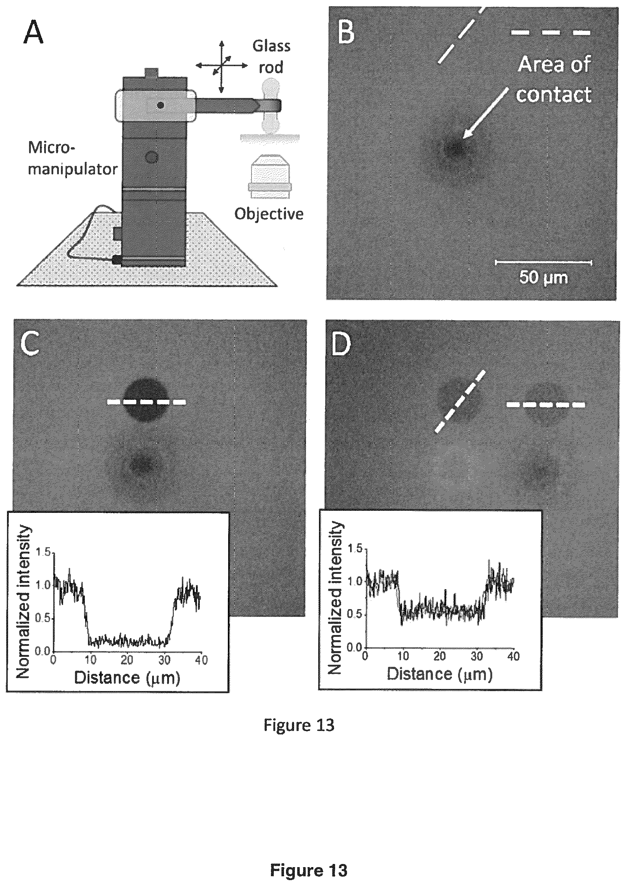

Figures 13B to 13D illustrate fluorescence micrographs obtained using the microscope illustrated in Figures 2A or 2B, which is represented schematically in Figure 13A for completeness. Figure 13B illustrates a fluorescence micrograph of the plane-sphere interface with both surfaces functionalized with a film of model polymers (Nsp1; here 1 mol% of the polymers was labelled with the fluorophore Atto488). It can be seen that the contact between both surfaces leads to a some local reduction in fluorescence. Figure 13C shows the interface shown in Fig.13B after photo-bleaching of a circular region. The lack of apparent recovery demonstrates that Nsp1 was bound and immobile on the surfaces. Fig.13D shows the interface shown in Fig.13C after retracting the spherical surface and making a new contact approximately 50 $\mu$m to the right. Comparison of fluorescence intensity profiles (insets in Figs.13C and 13D), taken along the white dashed lines in Fig.13 and Fig.13D, shows both surfaces were functionalized with Nsp1 at comparable densities.

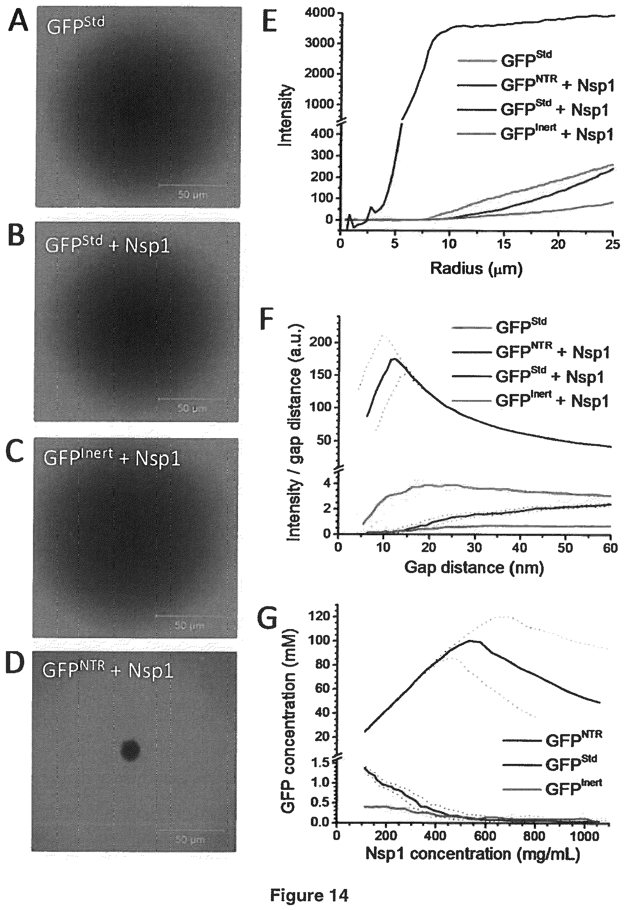

Figures 14A to 14G show an analysis of green fluorescence protein (GFP) distribution inside the polymer film with fluorescence microscopy. Figure 14A shows a fluorescence micrograph of GFP$^{Std}$ surrounding the contact point between bare planar and spherical surfaces.

Figure 14B is as in Fig.14A but with both surfaces functionalized with a Nsp1 film. Figures 14C-14D are as is Fig.14B but with two other GFP constructs, GFP$^{Inert}$ (Fig.14C) and GFP$^{NTR}$ (Fig.14D), instead of GFP$^{Std}$. Fig.14E shows integrated radial intensity profiles derived from the micrographs in Fig.14A-Fig.14D.

Figure 14F shows intensity profiles of micrographs in Figs.14A-14D, normalized with the gap distance between the planar and the spherical surface, plotted versus the gap distance (upper curve for each sample). Solid lines were computed with the most probable gap distance; dotted lines delineate the confidence interval based on the estimated $\pm$ 2 nm uncertainty in gap distance.

Figure 14G is the same as in Fig.14F but recalculated to GFP concentration and plotted versus the Nsp1 concentration.

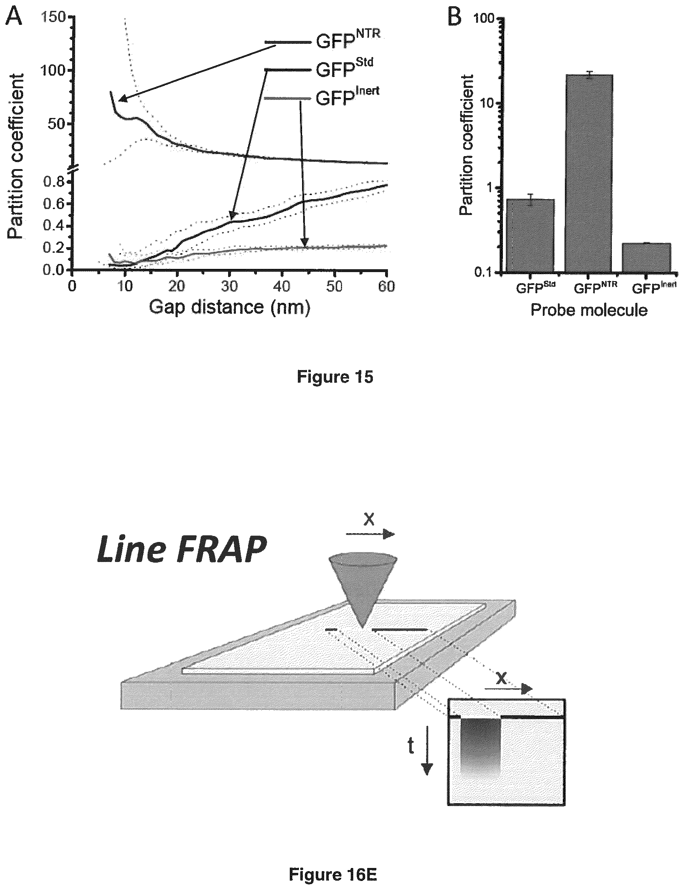

Figure 15 shows analysis of GFP partitioning distribution inside the polymer film with fluorescence microscopy. Figure 15A shows partition coefficients of GFP$^{Std}$, GFP$^{NTR}$ and GFP$^{Inert}$ inside the Nsp1 film, calculated from the data in Fig. 14F. Figure 15B shows a comparison of partition coefficients for a gap distance of 60 nm, that is, virtually uncompressed Nsp1 films. Mean from two independent measurements per GFP construct are shown; error bars represent highest and lowest numbers obtained.

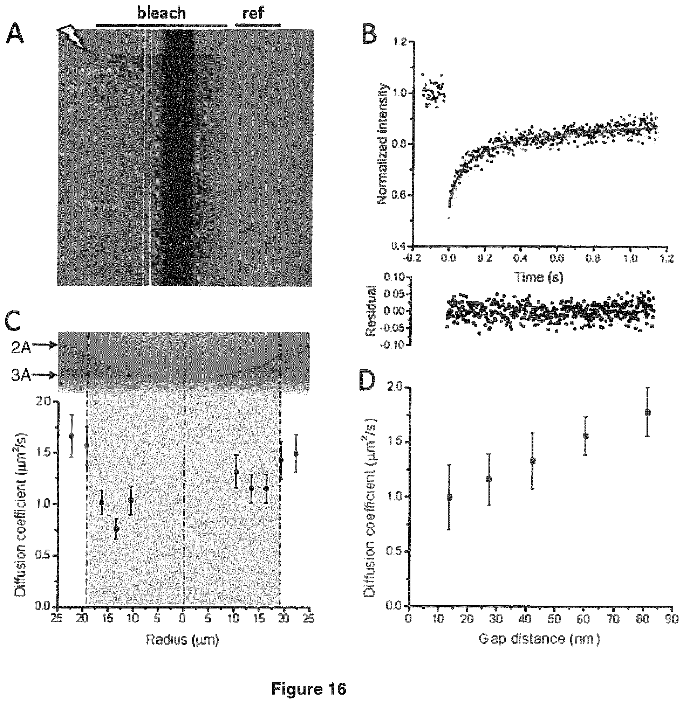

Figure 16E schematically illustrates a FRAP arrangement. Figure 16 shows a set (part A to D) of images of analysis of macromolecular diffusion along confined polymer films by line FRAP. Parts A-C of Fig.16 show representative data for GFP$^{NTR}$ in Nsp1 films and illustrate the data acquisition and analysis. Part A of Fig.16 shows a Kymograph of a scan line across the centre of the plane-sphere contact area (cf. Figure 14D). The two lines on top mark parts of the scan line that are photo-bleached ('Bleach'; flash marks time point of bleaching) and used as reference to correct for bleaching during imaging ('Ref), respectively. Part B of Fig.16 shows a fluorescence recovery curve (black dots) obtained from the data encased with a white box in part A. The best fit with the line FRAP model (line; residuals shown below) gives $D$ = 1.4 $\pm$ 0.2 $\mu$m$^2$/s, $k$ = 0.87 $\pm$ 0.01 and $K_0$ = 0.88 $\pm$ 0.03. Part C of Fig. 16 shows diffusion coefficients of GFP$^{NTR}$ at various distances from the contact point, where error bars represent the standard error of the fit. Part D of Fig. 16 shows diffusion coefficients as a function of gap distance for GFP$^{NTR}$ in Nsp1 films. Mean and standard deviations for 8 data points are shown where these correspond to 2 data points per image (left and right of the centre) from a total of four images selected from two independent measurements; the mobile fraction and bleaching parameter across these measurements were roughly constant, at $k$ = 0.84 $\pm$ 0.02 and $K_0$ = 0.93 $\pm$ 0.05, respectively.

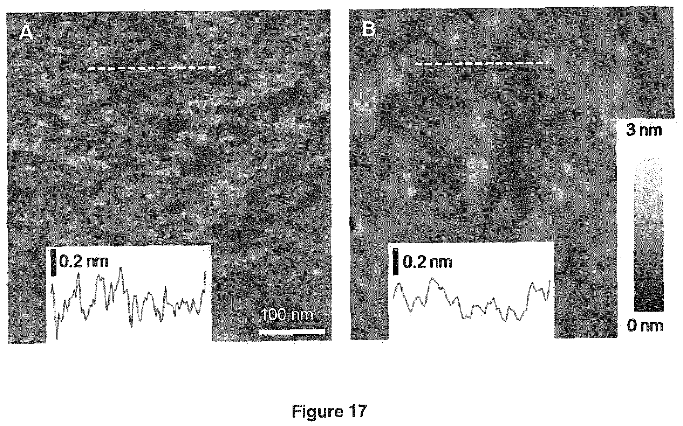

Figures 17A and 17B show glass surfaces are smooth on the nm scale. Atomic force micrographs (0.5 x 0.5 $\mu$m$^2$) of the surface of (A) a glass rod following the polishing procedure used to prepare spherical caps, and (B) a glass cover slip functionalized with EDTA. Insets show height profiles taken along the white dashed lines. The root-mean-square (rms) roughness values of these surfaces are 0.39 nm and 0.26 nm, respectively, demonstrating the glass surfaces are smooth on the nm scale.

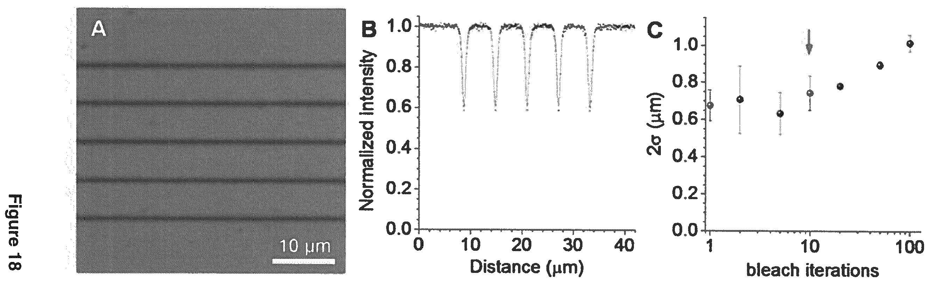

Figures 18A, 18B and 18C show a determination of the imaging resolution $r_{0c}$ and the width of the bleached line $r_{0c}$. The imaging resolution $r_{0c}$ and the width of the bleached line $r_{0e}$ were determined to be $r_{0e} = r_{0c} = 0.50 \pm 0.04$ $\mu$m. Figure 18A shows a confocal fluorescence micrograph of a monolayer of histidine-tagged GFP formed on an EDTA functionalized surface. This micrograph was obtained after several equidistant lines had been photo-bleached using the same settings as applied during lineFRAP. Figure 18B shows an intensity profile obtained by normalizing the data in Figure 18A and subsequent averaging along the horizontal axis (black dots). The red line represents the best fit with a sum of five Gaussian 'holes' and is seen to reproduce the data well. Figure 18C shows peak width, expressed as $2\sigma$ (where $\sigma^2$ is the variance), obtained from equivalent fits using a range of bleaching iterations (the arrow highlights the number of iterations used for LineFRAP). Error bars represent standard deviations across multiple images ($n = 10$ for 10 bleach iterations, $n = 2$ otherwise). Up to 20 bleach iterations, the peak width does not depend significantly on the number of bleach iterations; this indicates that the bleached line width does not depend on the bleaching level, implying that the bleached line width equals the imaging resolution, over this range. The convolution of the bleached lines with the imaging resolution gives $(2\sigma)^2 = r_{0e}^2 + r_{0c}^2$, and with $r_{0e} = r_{0c}$, we obtain $r_{0e} = r_{0c} = \sqrt{2}\sigma$. Averaging the data in Figure 18C, up to 20 bleach iterations gives $2\sigma = 0.71 \pm 0.06$ $\mu$m, and thus $r_{0e} = r_{0c} = 0.50 \pm 0.04$ $\mu$m.

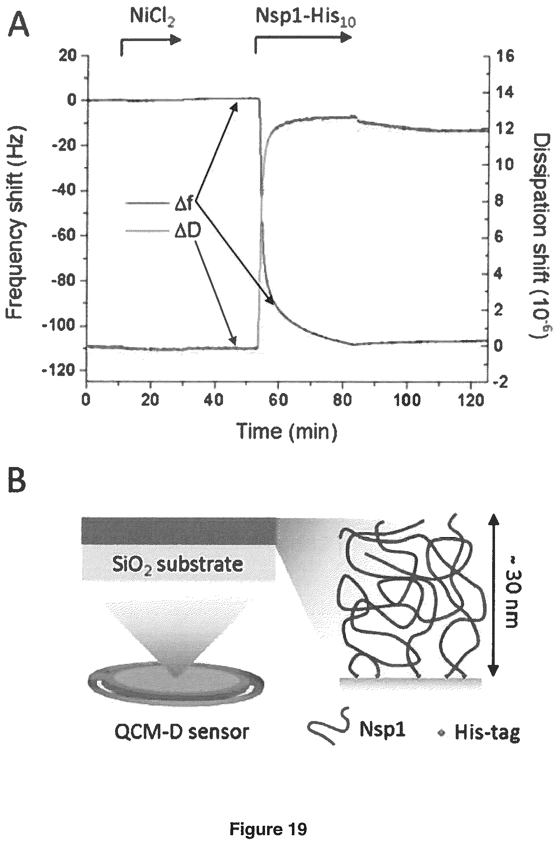

Figures 19A and 19B show a one-end grafting of Nsp1 FG domain polymers characterized by quartz crystal microbalance (QCM-D). The model polymer (Nsp1) films were made to have a surface coverage of 5 pmol/cm$^2$ and a thickness of approximately 30 nm. Figure 19A relates to QCM-D data for the binding of histidine-tagged Nsp1 to an EDTA functionalized surface. To a first approximation, a decrease in the frequency shift relates to addition of mass (including hydrodynamically coupled solvent) to the sensor surface, and the magnitude of dissipation provides information about the softness of the surface adlayer. Arrows on top of the graph indicate the start and duration of incubation with sample solution; during remaining times, the surface was exposed to plain working buffer. Conditions: NiCl$_2$ - 2 mM in working buffer, Nsp1 - 0.1 mg/mL in working buffer. Nsp1-His$_{10}$ binding is initially rapid and then slows down with a final frequency shift of -108 Hz being reached after 30 min of incubation. The Nsp1 film is stable to rinsing with working buffer, and the high dissipation indicates it is soft.

Figure 19B is a schematic representation of the formed brush of Nsp1 at the QCM-D sensor surface.

*Estimation of surface coverage and film thickness*

From the magnitude of the frequency shift measured for the Nsp1 film (-108 Hz), we conservatively estimate the Nsp1 surface density to $5 \pm 1$ pmol/cm$^2$ for all PSCM measurements according to previously established methods. Moreover, a previous extensive analysis by AFM nanoindentation, QCM-D and spectroscopic ellipsometry revealed the thickness of Nsp1 brushes at around 5 pmol/cm$^2$ to be approximately 30 nm.

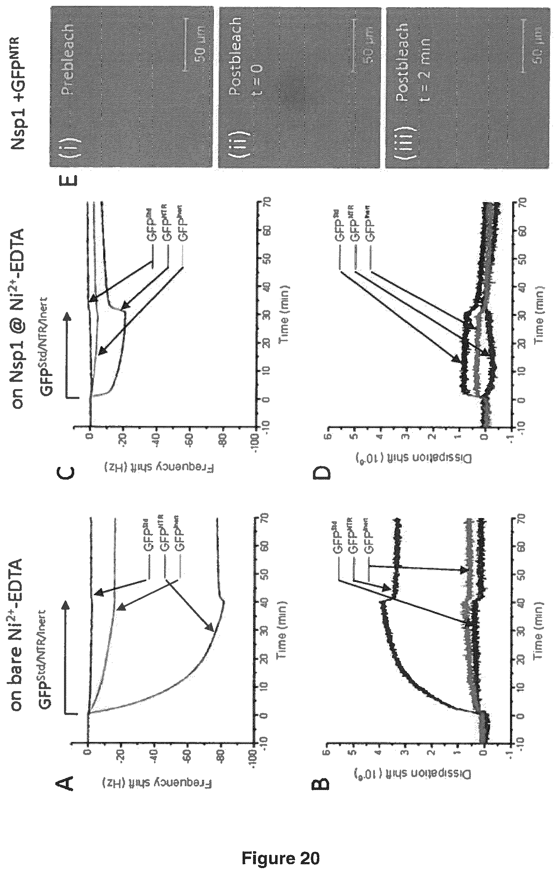

Figures 20A to 20E show interactions of GFP probe molecules with bare and Nsp1 functionalized surfaces. Figs.20A-20B show QCM-D data of the GFP probe molecules (GFP$^{Std}$, GFP$^{NTR}$ and GFP$^{Inert}$, as indicated) when exposed to Ni$^{2+}$-EDTA functionalized silica surfaces. Figs. 20C-20D show data as in Figs. 20A-20B but for Ni$^{2+}$-EDTA functionalized silica surfaces with an Nsp1 film (see Figure 19 for the film formation process). Arrows on top of the graph indicate the start and duration of incubation with 2 $\mu$M GFP solutions in working buffer; during remaining times, the surface was exposed to plain working buffer.

Fig.20E shows fluorescence micrographs of the GFP probe molecules on Nsp1 functionalized surfaces (corresponding to the scenario in Figs. 20C-20D). A central circular region (45 $\mu$m in diameter) was photo-bleached and the presented images were recorded before bleaching (i), just after bleaching (t = 0; ii) and 2 min post bleaching (iii). From the QCM-D data in Figs. 20C-20D, it is evident that GFP$^{Std}$ did not adsorb to the bare EDTA surface or the Nsp1 film. In contrast, GFP$^{NTR}$ and GFP$^{Inert}$ did adsorb to the bare EDTA surface although to different extents, and this binding was largely resistant to rinsing in working buffer. However, such undesired binding to the substrate was largely reduced in the presence of the Nsp1 films: whilst GFP$^{Inert}$ showed only minor binding, GFP$^{NTR}$ binding was pronounced yet largely reversible as expected for a specific interaction with Nsp1. The FRAP data in Fig. 20E confirm that virtually all GFP$^{NTR}$ is mobile and thus reversibly bound in Nsp1 films.

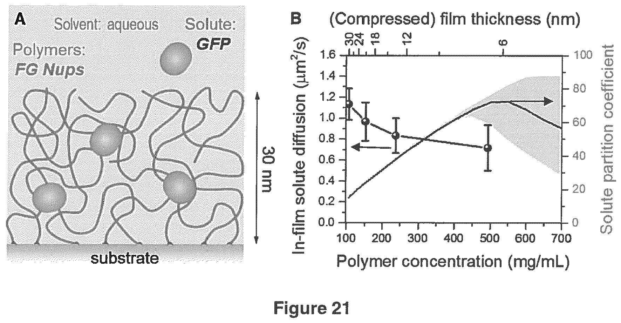

Figure 21 shows diffusion and partition coefficient quantities measured according to the invention. These example data are for GFP$^{NTR}$ in an Nsp1 film.

*Case study: the nuclear pore permselectivity barrier*

The presented analytical methodology, PSCM, is generic and applicable to a wide range of polymer film systems. Here, with the purpose to demonstrate the use of the methodology, we have selected a biomimetic system of the nuclear pore permeability barrier. The nuclear pore complex (NPC) controls exchange of biomolecules between the nucleus and the cytoplasm. Through selective transport of RNA and proteins, NPCs that perforate the nuclear envelope enable the spatial separation between transcription (cell nucleus) and translation (cytoplasm), which provides a powerful mechanism to control gene expression. Although small molecules up to roughly 5 nm in diameter can diffuse freely through the central channel of the NPC, the passage of larger macromolecules is impeded unless they are bound to nuclear transport receptors (NTRs). The NPC channel is approximately 40 nm wide and is filled with a meshwork of natively unfolded proteins (nucleoporins), acting as a selective permeation barrier.

Specialized nucleoporin domains rich in phenylalanine-glycine (FG) dipeptides (FG domains) are known to be responsible for permselectivity. For example, it has been shown that NTRs are substantially enriched in FG domain protein films. NTRs tend to have many FG motif binding sites, i.e. FG-NTR (and FG-FG) interactions are intrinsically multivalent. Recent studies have found that the thermodynamic and morphological aspects of NTR binding to FG domain assemblies can be described well by simple models that consider the FG domains as homogeneous flexible polymers and the NTRs as featureless spheres. This indicates that detailed structural features of FG domains and NTRs are secondary to function and that simple soft matter physics models are able to capture essential features of the system. Each FG domain contains several FG motifs, which contribute to intra- and intermolecular interactions of FG domains, as well as to the binding of NTRs.

Permselectivity consists of three basic, sequential steps: (I) entry into the pore, (II) diffusion through the pore, and (III) release from the pore. While steps (I) and (III) have been studied in detail and begin to be understood, much less is known about step (II). A main impediment within this area of research has been that techniques are lacking to study the diffusion process in confined spaces.

*Biomimetic model system of the nuclear pore permeability barrier*

End-grafted layers of the pore-filling proteins at a planar surface, i.e. a brush of natively disordered proteins, have been successfully used as a model system to study the properties and function of the NPC. Past work using this model system has mainly focused on morphology, (e.g. film thickness changes and phase formation) and thermodynamic parameters (e.g. partitioning of NTRs between the bulk phase and the FG domain film). Here, we utilize these end-grafted protein layers together with PSCM to extract information regarding both partitioning and diffusion of probe molecules within FG-nucleoporin films. As probe molecules we utilize $GFP^{Std}$ (enhanced green fluorescent protein); $GFP^{Inert}$, an inert GFP mutant (no accumulation within the protein brush), and $GFP^{NTR}$, a GFP mutant that was designed to gain NTR-like properties. Using these probe molecules we show the use of PSCM and quantify the diffusion coefficient of an NTR-like protein within an ultrathin film of FG-nucleoporins.

*Material and methods*

*Materials*

Chemicals were obtained from commercial sources and used without further purification. Ultrapure water (resistivity 18.2 M$\Omega$/cm) was used throughout. The FG domain of Nsp1 (amino acids 2 to 601) from *S. cerevisiae* with a C-terminal $His_{10}$ tag (Nsp1-$His_{10}$; 64.1 kDa) was produced and purified as described earlier. For fluorescent labelling, the N-terminal cysteine of the Nsp1-$His_{10}$ construct was reacted with Atto488-maleimide. Nsp1-$His_{10}$ constructs were stored at concentrations between 7.4 and 10 mg/ml in 50 mM Tris pH 8 with 6 M guanidine hydrochloride (GuHCl) at -80°C. Before use, the FG domains were diluted in working buffer (10 mM Hepes, 150 mM NaCl, pH 7.4) to a final concentration of 0.1 mg/ml.

Three probe molecules derived from green fluorescent protein (GFP) were used. $GFP^{Std}$ is the well known enhanced GFP. $GFP^{NTR}$ and $GFP^{Inert}$ are mutants. $GFP^{NTR}$ exhibits the qualities of an NTR in terms of facilitated transport through nuclear pores and in macroscopic FG domain hydrogels. $GFP^{Inert}$ is 'superinert' and effectively excluded from nuclear pores and macroscopic FG domain hydrogels. Before use, the GFP samples were diluted in working buffer, to a final concentration of 2 $\mu$M unless otherwise stated. Glass cover slips (24 $\times$ 24 mm2, #1.5, made from Schott D 263 M glass) were purchased from Thermo Scientific. Rods of borosilicate glass (type 1 class A) with a diameter of 5 mm were purchased from VWR.

*Fabrication of glass rods with hemispherical caps*

Glass rods were provided in approximately 25 mm long pieces. An end of a glass rod was polished to an approximately hemispherical shape. The radius of the hemispherical caps was measured using a digital slide calliper with an accuracy of 5 $\mu$m, and found to be around 3 mm. The surfaces thus prepared were smooth on the nanometre scale, with a root mean square roughness of 0.4 nm as measured by atomic force microscopy (see Figure 17A).

*EDTA functionalization of glass surfaces*

Glass cover slips and glass rods with hemispherical caps were coated with model polymer films. As an example, the glass surfaces to be functionalized with Nsp1 were prefunctionalized with EDTA to allow binding of polyhistidine tagged proteins. Prefunctionalisation with EDTA was performed using established protocols. For example, initially, the surfaces were cleaned by 10 min sonication in 2% SDS and water, respectively. After rinsing with water, surfaces were blow dried using nitrogen gas (N2) and treated with UV/ozone (ProCleaner 220, BioForce Nanosciences, USA) for 30 min. A desiccator harbouring 30$\mu$l APTES was purged with N2 for 2 min. The glass surfaces were then placed inside, followed by purging with N2 for 3 min. The desiccator was sealed and the surfaces were incubated for 1 h. The surfaces were then sequentially incubated in four freshly prepared aqueous coupling solutions (0.5 M EDTA, 0.25 mM EDC, pH 8.0), once for 3.25 h, twice for 2 h and then once for 15 h. After the final incubation the surfaces were rinsed with water and blow dried with N2. This surface coating did not enhance the surface roughness appreciably (see Figure 17B).The surfaces were stored in air at room temperature until use.

*Optical microscopy and setup of the plane-sphere confinement microscopy (PSCM)*

All microscopy experiments were performed using an inverted laser scanning microscope (LSM 880; Zeiss, Oberkochen, Germany) equipped with a 40$\times$ oil immersion objective with 1.4 numerical aperture (Plan-Apochromat 40x/1.4 Oil DIC M27). Images of 512 $\times$ 512 or 1024 $\times$ 1024 pixels were captured using a pixel dwell time of 2.06 $\mu$s. For fluorescence imaging the pinhole size was set to 5 airy units. This setting provided for robust alignment of the mid-plane of the confocal volume with the plane-sphere interface at a suitable lateral resolution ($r_{xy}$ = 0.50 $\pm$ 0.04 $\mu$m determined experimentally at 488 nm laser wavelength; see Figure 18).

The sample chamber consisted of a custom made PTFE holder to the planar bottom of which a suitably functionalized glass cover slip was glued using silicon glue (Twinsil; Picodent, Wipperfürth, Germany). The holder with coverslip was then mounted on the microscope stage. They formed the walls of a cylindrical cuvette of 10 mm diameter, the axis of which was coarsely aligned with the objective axis. To form Nsp1 films, EDTA-functionalized planar and spherical surfaces were incubated first with 2 mM NiCl$_2$ in working buffer (15 min) and then with 0.1 mg/mL Nsp1-His$_{10}$ in working buffer (30 min). After the latter incubation step, excess sample was removed by serial dilutions with working buffer. To visualize the Nsp1 film, 1 mol-% of fluorescently labelled Nsp1-His$_{10}$ was mixed into the Nsp1-His$_{10}$ solution in some experiments. Throughout the experiment protein-coated surfaces were kept in working buffer and not allowed to dry. Probe molecules were added to reach a final concentration of 2 $\mu$M unless otherwise stated.

One end of a suitably functionalized rod with spherical caps was lifted into the cylindrical cuvette with the aid of a micromanipulator (PatchStar; Scientifica, Uckfield, United Kingdom). Both transmitted and reflected laser light served as guidance to facilitate coarse alignment of the rod axis with the cuvette and objective axes before the spherical cap and the planar cover slip were brought into contact. Once contact between the surfaces was reached, the area of contact and its close surroundings (typically 150 $\times$ 150 $\mu$m$^2$) were imaged. In addition, RICM and FRAP experiments were carried out as described below.

The background fluorescence intensity was recorded with the focus position set 50 $\mu$m below the solid-liquid interface of the planar surface, i.e. within the glass coverslip. The average fluorescence intensity of such images was determined using ImageJ software.

*Reflection interference contrast microscopy (RICM)*

The plane-sphere geometry allows for the use of RICM, a well-established technique that utilizes the interference pattern created by reflections at the apposed planar and curved interfaces to determine the gap distance between them. In conventional RICM applications, the size of the spherical probe is normally in the micrometre range, and RICM has previously been combined with colloidal probe atomic force microscopy, for example, to study the mechanical properties of polymer brushes. In contrast, the spherical cap used here has a radius in the millimetre range.

For RICM imaging the pinhole was opened to the maximum and the focus was positioned a few micrometres below the upper surface of the glass cover slip. This provided a high contrast image of the circular interference pattern (Newtonian rings) with minimal stray light. RIC micrographs with the interference patterns were analysed with a custom written algorithm implemented in LabView (described previously) to quantify the effective surface distance at the centre of the plane-sphere interface. Data were fitted over an area of 170 $\times$ 170 $\mu$m$^2$ typically encompassing 6 full interference fringe rings.

Fixed input parameters for the algorithm were the diameter of the hemispherical cap ($R$ = 3 mm), the wavelength ($A$ = 633 nm), the pixel size, the refractive index of the buffer ($n$ = 1.334), and the illumination numerical aperture (INA = 0.999). The INA was experimentally determined by imaging the interference fringes formed between two non-parallel cover slips (air wedge in between the two surfaces) and by subsequently fitting the obtained intensity profile.

Adjustable parameters in the fitting routine were the effective RICM height along with two parameters accounting for background intensity, two parameters for amplitude normalization and one parameter accounting for residual defocus and errors in *R*.

*Fluorescence recovery after photobleaching in line mode (line FRAP)*

The diffusion of probe molecules within the overlapping polymer brushes was quantified using line FRAP. Using this technique a single line, across the point of contact between the two surfaces, was imaged continuously. After a number of scans, a part of the line was bleached and the fluorescence recovery was then monitored. Kymographs for line FRAP analysis were acquired as a times series of 512 line scans over 512 pixels. The first 50 line scans were used to acquire pre-bleach data. A selected part (260 pixels) of the line was then bleached using the maximal intensity of the 488 nm laser (10 bleach iterations; total bleach time 27.2 ms where this includes dead time e.g. for travel of the laser spot between lines), and the remaining lines were used to monitor the fluorescence recovery. Fluorescence recovery profiles were extracted from the kymographs using ImageJ and fits with the line FRAP model were performed in Origin Pro (OriginLab, Northampton, MA, USA).The normalized fluorescence intensity was determined by:

$$I_{\text{norm}}(x,t) = (I_{\text{meas}}(x,t) - I_{\text{bg}})/(I_{\text{pre}}(x) - I_{\text{bg}}),$$

where $I_{\text{meas}}(x,t)$ is the measured intensity at position $x$ and time $t$ after bleaching, $I_{\text{bg}}$ is the mean background intensity (measured by focusing inside the glass cover slip), and $I_{\text{pre}}(x)$ is the mean prebleach intensity (averaged over the scans prior to bleaching). This was further corrected for residual bleaching in the recovery phase as $I(x,t) = I_{\text{norm}}(x,t)/I_{\text{ref}}(t)$, where $I_{\text{ref}}(t)$ is the fluorescence intensity in a reference area that was exempt from deliberate photobleaching.

The fluorescence recovery in LineFRAP was described according to:

$$I(x,t) = k \sum_{j=0}^{\infty} \frac{(-K_0)^j}{j!} r_{0e} \left[ jr_{0c}^2 + \left(1 + 2j\frac{t}{\tau_r}\right) r_{0e}^2 \right]^{-1/2} + (1-k)I(x,0),$$

[17]

where $K_0$ is the bleaching parameter, $r_{0c}$ is the imaging resolution, and $r_{0e}$ the width of the bleached line. Moreover, the diffusion constant $D$ is obtained from the characteristic recovery time:

$$\tau_r = r_{0e}^2/4D$$

The term $k$ is the mobile fraction and $I(x,0)$ is the fluorescence intensity immediately after bleaching. In our experiments, we set the bleached fraction to be relatively small such that $r_{0e} \approx r_{0c}$ which simplifies the equation to:

$$I(x,t) = k \sum_{j=0}^{\infty} \frac{(-K_0)^j}{j!} \left[ 1 + j\left(1 + 2\frac{t}{\tau_r}\right) \right]^{-1/2} + (1-k)I(x,0).$$

[18a]

Implicit to Eq. 18a is:

$$I(x,0) = \sum_{j=0}^{\infty} \frac{(-K_0)^j}{j!} [1+j]^{-1/2},$$

[18b]

which ultimately gives:

$$I(x,t) = k \sum_{j=0}^{\infty} \frac{(-K_0)^j}{j!} \left[ 1 + j\left(1 + \frac{8D}{r_{0e}^2} t\right) \right]^{-1/2} + (1-k) \sum_{j=0}^{\infty} \frac{(-K_0)^j}{j![1+j]^{1/2}}.$$

[19]

When fitting with Eq. [19] we neglected all terms of $j \geq 6$. This sped up the analysis and had a negligible influence on the results. Moreover, we fixed $r_{0c} = r_{0e} = r_{xy} = 0.50$ $\mu$m. The three adjustable parameters thus were $D$, $k$ and $K_0$. Normalized $X^2$ values typically were around 5 and residuals scattered evenly around 0, indicating a good fit.

*Results*

The present example of plane-sphere confinement microscopy (PSCM) allows studies of diffusion processes within solvated polymer films at the solid-liquid interface. A planar and a spherical surface, both functionalized with the polymer film of interest, are brought into contact in a well-controlled fashion using a micromanipulator (e.g. Figure 2A to 7A). Thus, close to the point of contact between the planar and spherical surface the polymer films will overlap, excluding all bulk liquid. This is the region of primary interest for PSCM: thanks to the large size of the sphere, its lateral dimensions will exceed 10 $\mu$m for polymer coatings of > 10 nm in thickness (*vide infra*). Processes on this length scale can be readily resolved by fluorescence microscopy thus enabling the characterization of diffusion processes inside the polymer film without interference of the bulk solution. Here, it is first demonstrated how the confined geometry is realized and characterized, and then how information regarding the diffusion coefficient of the probe molecule and its partitioning between the polymer film and the bulk solution can be extracted.

*Defining the confined space between polymer-coated plane and hemisphere*

*Polymer coatings.*

The process to prepare Nsp1 films has previously been established and was here validated by quartz crystal microbalance (QCM-D) on an identically functionalized reference sensor surface (See Figure 19). Based on our previous work, we estimate that the Nsp1 film used here has a surface density of 5 $\pm$ 1 pmol/cm$^2$ and a thickness of $d_{\mathrm{Nspi}} \approx 30$ nm. The method of Nsp1 surface grafting was then transferred to planar glass cover slips and rods with a spherical cap. Aided by a micromanipulator, the spherical surface was aligned with the microscope objective and then lowered towards the planar surface until contact was reached (Figure 1B). Proper alignment allowed the contact point between the two surfaces to be positioned in the centre of the field of view upon first contact.

To confirm successful Nsp1 film formation in the PSCM setup, we incorporated 1 mol-% of Nsp1 labelled with Atto488 into the Nsp1 layers, and visualized the surface coatings in plane-sphere confinement geometry using confocal microscopy (Figure 13B). To probe how the Nsp1 films on the two apposed surfaces compare, a circular area close to the contact point was first photo-bleached, the sphere was then withdrawn, translated to the right by approximately 50 $\mu$m and brought back into contact (Figure 13C-D). This procedure revealed that Nsp1 was present on both surfaces at comparable surface density because the bleaching effect was split in two equal parts where the total loss of intensity in the two spots (2x 45%; inset Figure 13D) was identical to the total loss of intensity in the original spot (90%; inset Figure 13C). It is notable that the area of contact consistently appeared darker than the surrounding when Atto488 labelled Nsp1 was used; the fluorescence though largely recovered upon separation of sphere and plane (Figure 13C-D). This suggests that the strong compression in the contact area affected the fluorophore but that the Nsp1 film remained largely stable during contact.

*Gap distance and contact force.*

The interference of light reflected at the plane-solution and solution-sphere interfaces gives rise to a pattern of Newtonian rings. We exploited the capacity of the laser scanning microscope to acquire images of the reflected light, and such reflection interference contrast (RIC) micrographs were then analysed to quantify gap distances, and indirectly, the contact force. A representative RIC micrograph is shown in Figure 12A. The Newtonian rings appear symmetric and clean confirming that both surfaces have the expected smooth finish. The radial intensity profile (Figure 12B) could be well fit with an optical model assuming perfect plane-sphere geometry. However, the effective gap distances at the centre of the contact thus computed were consistently negative and increased in magnitude with the applied force (Figure 12C). This indicated there are significant deviations from the plane-sphere geometry. We hypothesized that these are due to the compressive force entailing the deformation of the planar and spherical surfaces (Figure 12D). To verify this, we computed the shape of the contacting surfaces as a function of compressive force using the Hertz contact model. Subjecting the corresponding idealized theoretical RICM intensity profiles to the above-mentioned optical model indeed generated fits of good quality with negative and force-dependent effective gap distances (Figure 12E), analogous to the experimental data. Moreover, we compared the applied forces predicted for what we operationally defined as 'soft', 'medium' and 'hard' contact in our experiments with rough estimates of the applied forces based on the magnitude of the micromanipulator's z motion and the mechanics of the lever arm to which the glass rod was attached. These were in good agreement, thus demonstrating that the RIC micrographs in conjunction with the Hertz model can be exploited (i) to estimate the contact force and (ii) to quantify the gap distance as a function of the distance from the centre of contact (Figure 12F).

From the RICM analysis, we estimate the compressive forces $F$ in our setup to range from 1 mN at 'soft' contact to 8 mN at 'hard' contact (Figures 12C and 12E). It can be estimated that forces of this magnitude would compress the Nsp1 film to an extent that virtually all solvent is squeezed out and an essentially incompressible polypeptide melt remains in the area of contact. From the Nsp1 graftings density and considering also the presence of the EDTA functionalisation, we can estimate that this compact organic film has a thickness of $d_{compact}$ = 3.0 ± 0.7 nm.

All measurements presented in the following we performed at soft contact. We hence used the appropriate gap distances shown in Figure 12F whenever data for two bare surfaces were analysed, and augmented these values by 2 x 3 nm = 6 nm when the surfaces were coated with Nsp1 films. From the reproducibility of the compressive forces (considering the reproducibility of contact formation, Figure 12C, and also the effect of thermal drifts during data acquisition), we estimate that the gap distances thus determined are accurate to within ± 2 nm.

*Quantification of the partitioning of macromolecules within the polymer film and in the bulk solution*

Having defined the polymer coating and the geometry of the confined space, we can now introduce the diffusing probe molecule. Here, we have selected three probe molecules that have the same size but are expected to differ drastically in their interaction with FG domain films. GFP[Std] is the enhanced green fluorescent protein and is known to be weakly attracted to Nsp1 through a low level of nonspecific interactions. GFP[Inert] is a mutant engineered to minimize such interactions. In contrast, GFP[NTR] is a mutant engineered to gain properties much alike a nuclear transport receptor with an enhanced attraction to Nsp1.

We verified that all GFP constructs showed negligible non-specific binding to our Nsp1-coated substrates (See Figure 20). In a first instance we then focused on the distribution of GFP constructs in the Nsp1 films. Figures 14A and 14B show fluorescence micrographs of GFP[Std] surrounding the contact point between the planar and the spherical surface (centre of image), for bare and Nsp1 functionalized surfaces, respectively. Although this is not immediately apparent in the micrographs, the corresponding radial intensity profiles clearly reveal that GFP[Std] was partly excluded from the Nsp1 film (Figure 14E).

Equivalent micrographs of GFP[Inert] and GFP[NTR] surrounding the contact point between Nsp1 functionalized surfaces are shown in Figures 14C and 14D, respectively. Similar to GFP[Std], GFP[Inert] was also excluded from the Nsp1 film albeit to a greater extent. In contrast, as evident from the micrographs and the corresponding radial intensity profiles, GFP[NTR] was substantially enriched in the Nsp1 film. For further analysis, we focused on the confined region in which the Nsp1 films that coat the planar and spherical surfaces overlap. Based on the geometry of the confined space (established by RICM for 'soft' contact as shown in Figure 12F, and the additional 6 nm of compacted Nsp1 film in the contact area) and a thickness of -30 nm per uncompressed Nsp1 film (See Figure 19), one can estimate that this zone extends 19 μm from the centre of the contact area.

Because the extension of the confocal volume in z is much larger than the gap distance, the intensities shown in Figure 14E can be expected to scale with the areal density of GFP molecules (i.e. GFP molecules per unit of projected area). Thus, by re-scaling the intensity by the gap distance, a measure of the GFP concentration within the gap volume can obtained. This data is shown in Figure 14F as a function of the gap distance. In the case of GFP[Std] confined between bare surfaces the rescaled intensity is constant for gap distances of 20 nm and more; it gradually decreases towards smaller distances and practically attains zero around 5 nm.

The observed trends are consistent with expectations for simple volume exclusion: GFP has a size of 5 nm and should thus not penetrate into gaps smaller than that, and depletion effects at the wall are expected to lead to a gradual increase in concentration for small gap distance until a plateau corresponding to the bulk concentration is effectively reached. The match with these expectations lends support to the validity of the analytical approach. In addition, this control has the benefit of enabling conversion of the re-scaled intensities into concentrations: by identifying the plateau value of $I_{re-scaled}$ = 3.5 with the bulk concentration $c_{bulk}$ = 2 μM, we have $c$ = 2 μM / 3.5 × $I_{re-scaled}$.

In Nsp1 films, all GFP constructs show a behaviour that differs from GFP[Std] between bare surfaces: GFP[Std] and even more so GFP[inert] are depleted, whereas GFP[NTR] is strongly enriched. Moreover, it is notable that the concentration of all GFP constructs varies substantially with gap distance. Figure 14G shows the same data as Figure 14F but with the gap distance converted to Nsp1 concentrations based on the known areal mass density of 320 ng/cm$^2$ (corresponding to 5 pmol/cm$^2$, or a root-mean square distance between anchor points of approximately 6 nm; See Figure 19) for each of the two apposed Nsp1 films. This plot represents the first main outcome of the PSCM method. A notable finding is that the concentration of GFP[NTR] increases with Nsp1 concentration (with a linear dependence) over a substantial range of Nsp1 concentrations before it shows the decrease that can be consistently seen for GFP[inert] and GFP[Std].

The partition coefficients (Figure 15), describing the partitioning of probe molecules between bulk solution and the Nsp1 film, were determined from the data presented in Figure 14F by calculating the ratios of intensities for GFP[Std/NTR/Inert] in Nsp1 films and GFP[Std] between bare surfaces. Figure 15A shows how the partition coefficient varies within the overlapping Nsp1 films. It was evident that GFP$^{Std}$ and GFP$^{Inert}$ were excluded from the Nsp1 film (partition coefficients < 1) while GFP$^{NTR}$ was strongly enriched. At the point where the two Nsp1 brushes come together ($d_{gap}$ = 2*$d_{Nspi}$ ≈ 60 nm) the partition coefficients of GFP$^{Std}$, GFP$^{NTR}$ and GFP$^{Inert}$ were determined to 0.72, 22 and 0.22, respectively (Figure 15B).

*Quantification of macromolecular diffusion within confined polymer layers*

In contrast to conventional FRAP, line FRAP enables the analysis of spatial variations (i.e. along the bleached line) in diffusion in a single measurement with a resolution down to a few micrometres. We chose this approach as it is particularly well suited to probe how the diffusion varies with the gap distance, and thus, the polymer concentration.

The kymograph in Figure 16A shows a line FRAP data set for GFP$^{NTR}$ in Nsp1 films, where the imaged line was set to go through the centre of the plane-sphere interface. The photo-bleached part of the line (cutting asymmetrically across the centre) and the subsequent fluorescence recovery are readily visible in this crude presentation and demonstrate that GFP$^{NTR}$ is mobile anywhere in the confined area except in the ~10 $\mu$m wide central exclusion zone which is hardly penetrated.

Figure 16B shows a recovery curve obtained by averaging over a 3 $\mu$m wide section of the line (encased in white in Figure 16A). The best fit with a diffusion model (line) assuming a mobile fraction $k$ with diffusion coefficient $D$ reproduces the data well and confirms that GFP$^{NTR}$ is essentially fully mobile. Performing such analyses along the bleached line reveals how the diffusion constant varies with the distance from the centre and thus, with the gap distance or polymer concentration. Figure 16C illustrates how the diffusion coefficient of GFP$^{NTR}$ varies with the distance from the centre based on Figure 16A. Figure 16D shows how the GFP$^{NTR}$ diffusion coefficient (averaged from multiple measurements), varies with the gap distance.

From figure 16D, it can be seen that GFP$^{NTR}$ diffuses with $D$ = 1.6 $\pm$ 0.2 $\mu$m$^2$/s at the point where the Nsp1 films just overlap, and that the diffusion constant decreased only moderately with increasing Nsp1 concentration (i.e. decreasing gap distance).

*Discussion*

Below are listed a few of the main outcomes of the present invention, and applications of it such as exemplified in (but not limited to) the examples described herein.

*Main performance features of PSCM*

Contact forces can be estimated, and can be set large enough to compress polymer films such that substantially all solvent is squeezed out in the area of closest contact. Gap distances can be quantified with an accuracy of a few nm. Macromolecular binding can be quantified as a function of polymer concentration in a single experiment. Combined with measurements over a range of macromolecule bulk concentrations, it is possible to obtain binding isotherms as a function of polymer concentrations in a single measurement. Partition coefficients between the bulk and the polymer phase (and within the polymer phase) can be quantified. Diffusion along polymer films can be quantified, and this as a function of polymer concentration.

The technique is versatile, and it is compatible with confocal and wide-field microscopy setups. It is also compatible with various methods to measure diffusion such as FRAP, FCS and single particle tracking. For the latter application, a good signal to noise ratio is achievable even without total internal reflection fluorescence (TIRF) illumination because the confinement already avoids background fluorescence from the bulk solution.

The invention provides a novel analytical apparatus and method that allows quantitative characterization of macromolecular diffusion within (10s to 100s of nanometre) thin solvated polymer coatings. The method can be integrated with conventional laser scanning microscopes, and is versatile. It provides quantitative information about the diffusion of macromolecules within the polymer coating, and about the partitioning of macromolecules between the polymer film and the bulk solution. Thanks to the shape of the confined geometry, these parameters can also be mapped as a function of polymer film compression (and concentration) in a single experiment.

The described methodology is generic and may find widespread use in the analysis of solvated polymer films and their interaction with fluorescent macromolecular probes. An application in basic science are biomimetic model systems, such as the nuclear pore permeability barrier presented here, where this method can provide new insight into transport processes in complex polymeric environments. However, the potential use is much broader and the methodology has wide use in other areas of application, including biomaterials, biosensors, nanomedicine, anti-fouling and anti-microbial coatings, purification and separation membranes, food processing and paints.

Using the case of the nuclear pore permselectivity barrier, simply to exemplify an application of the invention for a better understanding of the invention, there is demonstrated herein a direct quantitation of the diffusion coefficient of an NTR-like molecule within nanoscale assemblies of FG nucleoporins.

**Claims**

1. A surface force apparatus (SFA) comprising:

   a first pressing member (2) presenting a convex first bearing surface having a radius of curvature;
   a second pressing member (3) presenting a second bearing surface;
   wherein at least one of the first and second bearing surfaces comprises an external surface configured to receive thereupon a film of material for immersion in a bulk solvent fluid thereby to be solvated by molecules from the bulk solvent fluid;
   a manipulator configured to move at least one of the first and second pressing members to cause the first and second bearing surfaces to bear against each other with a substantially constant and static urging force such that parts of a said film occupy a gap thereby formed between the first and second bearing surfaces which expels bulk solvent fluid;
   wherein the ratio ($F/R$) of the magnitude ($F$) of the urging force and the radius of curvature ($R$) of the first bearing surface is in the range 0.3 N/m to 100.0 N/m.

2. A surface force apparatus according to any preceding claim wherein the manipulator is controllable to control the urging force applied thereby to at least one of the first pressing member and the second pressing member, therewith to control the dimensions of the gap.

3. A surface force apparatus according to any preceding claim including:

   a probe light source (4) configured to illuminate the gap with probe light to generate a visible optical interference pattern created by the probe light at the gap;
   wherein the manipulator is controllable to control the urging force applied thereby to at least one of the first pressing member and the second pressing member, therewith to control the dimensions of the gap by adjusting the interference pattern.

4. A surface force apparatus according to claim 3 comprising:

   a photodetector (5) configured to detect the optical interference pattern created by the probe light at the gap;
   wherein the surface force apparatus is arranged to output image data of the optical interference pattern generated by the photodetector for use by a user in forming an image on an image display apparatus.

5. A surface force apparatus according to claim 4 further arranged to analyse image data of the optical interference pattern generated by the photodetector, and therewith to calculate and apply an adjustment to the urging force according to that pattern.

6. A surface force apparatus according to any preceding claim wherein the second bearing surface is substantially planar, or the second bearing surface is convex, or the second bearing surface is concave with a radius of curvature thereof has a magnitude exceeding the magnitude of the radius of curvature of the first bearing surface.

7. A surface force apparatus according to any preceding claim wherein the manipulator is configured to translate the first pressing member laterally across the second bearing surface to select a location thereupon to cause the first bearing surface to bear against the second bearing surface.

8. A surface force apparatus according to any preceding claim wherein the manipulator is configured to translate the first pressing member transversely towards or away from the second pressing member to cause or cease the first bearing surface to bear against the second bearing surface.

9. A surface force apparatus according to any preceding claim wherein the manipulator comprises a fulcrum to which a lever arm is pivotingly mounted and one of the first pressing member and the second pressing member is attached to the lever arm to apply a torque to the fulcrum, and wherein the manipulator is operable to move the position of the fulcrum transversely towards or away from the other of the first pressing member and the second pressing member to adjust said torque thereby to control the angle at which the one of the first pressing member and the second pressing member applies said substantially constant and static urging force to the other of the first and the second pressing member.

10. A method for controlling a solvated film of material comprising;

providing a surface force apparatus (SFA) comprising a first pressing member presenting a convex first bearing surface having a radius of curvature, and a second pressing member (3) presenting a second bearing surface; forming a film of material upon an external surface of at least one of the first and second bearing surfaces; immersing said film(s) in a bulk solvent fluid thereby to solvate the film(s) with molecules from the bulk solvent fluid; moving at least one of the first and second pressing members to cause the first and second bearing surfaces to bear against each other with a substantially constant and static urging force such that parts of a said film occupy a gap thereby formed between the first and second bearing surfaces which expels bulk solvent fluid; wherein the ratio ($F/R$) of the magnitude ($F$) of the urging force and the radius of curvature ($R$) of the first bearing surface is in the range 0.3 N/m to 100.0 N/m.

11. A method according to any of claim 10 including:

illuminating the gap with probe light to generate a visible optical interference pattern created by the probe light at the gap; controlling the urging force applied to at least one of the first pressing member and the second pressing member, therewith to control the dimensions of the gap by adjusting the interference pattern.

12. A method according to any of claims 10 to 11 including:
translating the first pressing member transversely towards or away from the second pressing member to cause or cease the first bearing surface to bear against the second bearing surface: wherein the manipulator comprises a fulcrum to which a lever arm is pivotingly mounted and one of the first pressing member and the second pressing member is attached to the lever arm to apply a torque to the fulcrum: the method including moving the position of the fulcrum transversely towards or away from the other of the first pressing member and the second pressing member to adjust said torque thereby to control the angle at which the one of the first pressing member and the second pressing member applies said substantially constant and static urging force to the other of the first and the second pressing member.

13. A method according to any of claims 10 to 12 including determining the dimensions of the gap by:

from said interference pattern, determining a depth of penetration of one of the first bearing member and the second bearing member into the bearing surface of the other of the first bearing member and the second bearing member; determining an optical thickness of said film compressed between the first bearing surface and the second bearing surface; calculating a value of the urging force according to the determined a depth of penetration and the determined optical thickness; calculating said dimensions of the gap according to the calculated value of the urging force and the determined optical thickness of said film compressed between the first bearing surface and the second bearing surface.

14. A method according to any of claims 10 to 13 including determining the dimensions of the gap by:

from said interference pattern, determining a depth of penetration of one of the first bearing member and the second bearing member into the bearing surface of the other of the first bearing member and the second bearing member; determining a value of the urging force; calculating an optical thickness of said film compressed between the first bearing surface and the second bearing surface according to the determined a depth of penetration and the determining urging force; calculating said dimensions of the gap according to the determined value of the urging force and the calculated optical thickness of said film compressed between the first bearing surface and the second bearing surface.

15. A method for determining a partition coefficient of said molecules as between said bulk solution and said solvated film of material, including controlling the solvated film of material according to any of claims 10 to 14, and determining a partition coefficient in respect of said solvated film within said gap.

**Figure 1A**

**Figure 1B**

**Figure 2A**

**Figure 2B**

**Figure 3A**

| | |
|---|---|
| S1 → | Adjust the micromanipulator in $x$ and $y$ to set the desired position of contact on the 2nd bearing part. |
| S2 → | Adjust the micromanipulator in $z$ to facilitate an approach angle of 90 degrees between the 1st bearing part and the 2nd bearing part (i.e. the rod axis and the planar surface). |
| S3 → | Lower the lever arm to lower the 1st bearing part towards the 2nd bearing part until contact is reached. |
| S4 → | The bearing force between the two surfaces is set by a further reduction in the micromanipulator $z$ position, by a defined distance $\Delta z$, to give a set bearing force $F = k \, \Delta z$ where $k$ is the spring constant of the flexible lever arm. |
| S5 → | Take optical measurements to determine radial gap profile. |

**Figure 3B**

**Figure 4A**

| | |
|---|---|
| S6 → | Adjust the micromanipulator in $x$ and $y$ to set the desired position of contact on the 2nd bearing part. |
| S7 → | Adjust the micromanipulator in $z$ to facilitate an approach angle of 90 degrees between the 1st bearing part and the 2nd bearing part (i.e. the rod axis and the planar surface). |
| S8 → | Lower the lever arm to lower the 1st bearing part towards the 2nd bearing part until contact is reached. |
| S9 → | The bearing force between the two surfaces is set by a further reduction in the micromanipulator $z$ position, by a defined distance $\Delta z$, to give a set bearing force $F = k\,\Delta z$ where $k$ is the spring constant of the flexible lever arm. |
| S10 → | A reflection interference contrast (RIC) microscope monitors the gap between the two surfaces in and around the contact region. |
| S11 → | Take optical measurements to determine radial gap profile. |

**Figure 4B**

**Figure 5A**

S12 → Adjust the micromanipulator in *x* and *y* to set the desired position of contact on the 2nd bearing part.

S13 → Adjust the micromanipulator in *z* to facilitate an approach angle of 90 degrees between the 1st bearing part and the 2nd bearing part (i.e. the rod axis and the planar surface).

S14 → Pivot the lever arm to lower the 1st bearing part towards the 2nd bearing part until contact is reached.

S15 → The bearing force between the two surfaces is set by gravitation. Adjust the strength of the magnet to a suitable upward force to achieve the desired bearing force.

S16 → Take optical measurements to determine radial gap profile.

**Figure 5B**

12
pivot
point

11

14

9

2

1

3

6

**Figure 6A**

S17 → Adjust the micromanipulator in $x$ and $y$ to set the desired position of contact on the $2^{nd}$ bearing part.

S18 → Adjust the micromanipulator in $z$ to facilitate an approach angle of 90 degrees between the $1^{st}$ bearing part and the $2^{nd}$ bearing part (i.e. the rod axis and the planar surface).

S19 → Pivot the lever arm to lower the $1^{st}$ bearing part towards the $2^{nd}$ bearing part until contact is reached.

S20 → The bearing force between the two surfaces is set by gravitation.

S21 → Take optical measurements to determine radial gap profile.

**Figure 6B**

Figure 7A

| | |
|---|---|
| S22 → | Adjust the micromanipulator in $x$ and $y$ to set the desired position of contact on the $2^{nd}$ bearing part. |
| S23 → | Adjust the micromanipulator in $z$ to facilitate an approach angle of 90 degrees between the $1^{st}$ bearing part and the $2^{nd}$ bearing part (i.e. the rod axis and the planar surface). |
| S24 → | Pivot the lever arm to lower the $1^{st}$ bearing part towards the $2^{nd}$ bearing part until contact is reached. |
| S25 → | The bearing force between the two surfaces is set by gravitation. Adjust the position/weight of the load to achieve the desired bearing force. |
| S26 → | Take optical measurements to determine radial gap profile. |

Figure 7B

S27 → Form a reflection interference contrast (RIC) pattern at the gap between the two surfaces in and around the contact region.

S28 → Using the interference pattern, determine a depth of penetration of the first bearing into the bearing surface of the second bearing member.

S29 → Determine an optical thickness of the film compressed between the first bearing surface and the second bearing surface at the central contact point.

S30 → Calculate a value of the urging force according to the determined depth of penetration and the determined optical thickness

S31 → Calculate the dimensions of the gap according to the calculated value of the urging force and the determined optical thickness of the film compressed between the first bearing surface and the second bearing surface

**Figure 8A**

S32 → Form a reflection interference contrast (RIC) pattern at the gap between the two surfaces in and around the contact region.

S33 → Using the interference pattern, determine a depth of penetration of the first bearing into the bearing surface of the second bearing member.

S34 → Determine a value of the urging force

S35 → Calculate an optical thickness of the film compressed between the first bearing surface and the second bearing surface at the central contact point, according to the determined a depth of penetration and the determined urging force

S36 → Calculate the dimensions of the gap according to the determined value of the urging force and the calculated optical thickness of the film compressed between the first bearing surface and the second bearing surface

**Figure 8B**

F1

11

12

13

F2    14

2

3

9

Figure 9A

11

12

14

13

9

F2

3

Figure 9B

**Figure 10**

Figure 10D

Figure 11

Figure 12

Figure 13

Figure 13

Figure 14

Figure 15

Figure 16E

Figure 16

Figure 17

Figure 18

Figure 19

Figure 20

Figure 21

Europäisches
Patentamt

European
Patent Office

Office européen
des brevets

## EUROPEAN SEARCH REPORT

Application Number

EP 19 31 5169

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VALTINER ET AL.: "The Electrochemical Surface Forces Apparatus: The Effect of SurfaceRoughness, Electrostatic Surface Potentials, and Anodic OxideGrowth on Interaction Forces, and Friction between DissimilarSurfaces in Aqueous Solutions", LANGMUIR, vol. 28, 2012, pages 13080-13093, XP002799410, * page 13082, column 1, last paragraph - page 13082, column 2, paragraph 1 * * page 13083, column 2, paragraph 2 - page 13086, column 1, paragraph 1; figures 1-9 * ----- | 1,2,8 | INV. G02B21/32 |
| Y | SCHRADER ET AL.: "Correlating steric hydration forces with waterdynamics through surface force and diffusion NMRmeasurements in a lipid DMSO H2O system", PNAS, vol. 112, no. 34, 2015, pages 10708-10713, XP002799411, * page 10709, column 1, paragraph 3 - column 2, paragraph 2; figures 1-3 * ----- | 1,2,8 | |
| Y | ISRAELACHVILI ET AL.: "Rceent advances in the surface forces apparatus (SFA) technique", REPORTS ON PROGRESS IN PHYSICS, vol. 73, 036601, 2010, pages 1-16, XP002799412, * page 2, column 2, paragraph 2 - page 14, column 1, paragraph 2; figures 1-13 * ----- -/-- | 1,2,7-9, 12 | |

TECHNICAL FIELDS SEARCHED (IPC)

G02B

The present search report has been drawn up for all claims

| Place of search | Date of completion of the search | Examiner |
|---|---|---|
| Munich | 16 June 2020 | Frisch, Anna Maria |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

EP 19 31 5169

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KAI KRISTIANSEN ET AL: "3D Force and Displacement Sensor for SFA and AFM Measurements +", LANGMUIR, vol. 24, no. 4, 1 February 2008 (2008-02-01), pages 1541-1549, XP055075097, ISSN: 0743-7463, DOI: 10.1021/la702380h * table 2 * | 1,2,8 | |
| X | PLUNKETT AND RUTLAND: "Dynamic adhesion of grafted polymer surfaces asstudied by surface force measurements", JOURNAL OF ADHESION SCIENCE AND TECHNOLOGY, vol. 16, no. 7, 2002, pages 983-996, XP002799413, * page 985, paragraph 4 - paragraph 5 * * page 986, paragraph 1 - paragraph 2 * * page 990, paragraph 3; figures 1-6 * | 1,2,6,8, 10,11 | |
| X | GREENE G W ET AL: "Role of electrochemical reactions in pressure solution", GEOCHIMICA ET COSMOCHIMICA ACTA, PERGAMON PRESS, NEW YORK, NY, US, vol. 73, no. 10, 15 May 2009 (2009-05-15), pages 2862-2874, XP026020241, ISSN: 0016-7037, DOI: 10.1016/J.GCA.2009.02.012 [retrieved on 2009-02-25] | 1-6,8, 10,11, 13-15 | TECHNICAL FIELDS SEARCHED (IPC) |
| Y | * page 2864, column 1, paragraph 2 * * page 2868, column 2, paragraph 3 - page 2873, column 2, paragraph 4; figures 1-13 * | 7,9,12 | |

The present search report has been drawn up for all claims

| Place of search | Date of completion of the search | Examiner |
|---|---|---|
| Munich | 16 June 2020 | Frisch, Anna Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2